(19) **Europäisches Patentamt / European Patent Office / Office européen des brevets**

(11) **EP 4 755 630 A1**

(12) **EUROPEAN PATENT APPLICATION**
published in accordance with Art. 153(4) EPC

(43) Date of publication:
**10.06.2026 Bulletin 2026/24**

(21) Application number: **24849276.1**

(22) Date of filing: **01.08.2024**

(51) International Patent Classification (IPC):
*B32B 27/32* (2006.01)          *B05D 3/00* (2006.01)
*B05D 3/02* (2006.01)          *B05D 3/12* (2006.01)
*B05D 7/24* (2006.01)          *C09D 4/00* (2006.01)
*C09D 201/00* (2006.01)

(52) Cooperative Patent Classification (CPC):
**B05D 3/00; B05D 3/02; B05D 3/12; B05D 7/24;**
**B32B 27/32; C09D 4/00; C09D 201/00**

(86) International application number:
**PCT/JP2024/027627**

(87) International publication number:
**WO 2025/028631 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.08.2023 JP 2023126372**

(71) Applicants:
• **artience Co., Ltd.**
**Chuo-ku**
**Tokyo 104-0031 (JP)**

• **TOYO INK CO., LTD.**
**Chuo-ku,**
**Tokyo 104-8378 (JP)**

(72) Inventors:
• **MAMIYA Michitaka**
**Tokyo 104-8378 (JP)**
• **URABE Hikaru**
**Tokyo 104-8378 (JP)**
• **SUGI Hiroki**
**Tokyo 104-8378 (JP)**

(74) Representative: **Becker, Eberhard**
**Becker Kurig & Partner**
**Patentanwälte mbB**
**Bavariastraße 7**
**80336 München (DE)**

(54) **MULTILAYER BODY, METHOD FOR PRODUCING SAME, PACKAGING MATERIAL, AND COATING AGENT**

(57) Disclosed is a multilayer body which sequentially has a base material 1, an adhesive layer, and a base material 2 in this order, and which additionally has a coating layer. The base material 1 and the base material 2 contain a polyolefin resin. The coating layer contains a resin (A) which has a glass transition point of 115°C or higher. When heat and pressure are applied to the multilayer body under the heating and pressurization conditions described below, the shrinkage ratio of the multilayer body expressed by (formula 1) is 30% by area or less. (Heating and pressurization conditions) Heating temperature: 145°C Pressurization: 2 kg/cm$^2$ Heating and pressurization time: 1 second (Formula 1): Shrinkage ratio (% by area) = (1 - (area after heating and pressurization)/(area before heating and pressurization)) × 100

FIG. 1

**Description**

Technical Field

Embodiments of the present invention relate to a laminate excellent in heat resistance, bag forming suitability, and adhesion, and a method for producing the same. In addition, embodiments of the present invention relate to a packaging material using the laminate, and a coating agent capable of being suitably used for configuring the laminate.

Related Art

Packaging bags for flexible packages are produced by combining multiple types of plastic materials. Typically, biaxially oriented films of polypropylene or polyester are used to obtain mechanical strength of the packaging bag, and polyethylene, polypropylene, ethylene vinyl acetate copolymer, etc. are used as heat sealing materials for sealing contents as packaging bags.

The selection of the above materials has conventionally been designed with emphasis on suitability in each process such as packaging, transportation, storage, and opening of the contents. However, in recent years, due to increasing awareness of environmental issues, resource conservation and recyclability of various products have become important considerations.

Patent Document 1 discloses a laminate including a base material, an adhesive layer, and a sealant layer, in which the base material and the sealant layer are composed of polyethylene from the viewpoint of mono-materialization, thereby improving recyclability.

In the bag forming process for producing packaging bags, there is a process in which, with the laminate folded such that the sealant layers overlap each other, heat sealing is performed by applying pressure from the outer surface side of the base material layer of the laminate using a high-temperature jig to sandwich the laminate. The jig of the heat sealing machine is heated to high temperature, and the outer surface side of the base material layer in direct contact with the jig is exposed to high temperature. Therefore, in the case of producing a packaging bag using the laminate described in Patent Document 1, thermal shrinkage of the heat-sealed portion and/or a phenomenon (fusion and breaking) in which the heat-sealed portion is cut from the laminate may occur due to the effect of heat on the base material layer, and bag forming suitability is not sufficient.

Patent Document 2 discloses a laminate including a coating layer, a base material layer, and a sealant layer, in which the base material layer and the sealant layer are composed of polyethylene, and the coating layer further contains a heat-resistant resin.

The invention described in Patent Document 2 is a laminate that aims to improve heat sealing suitability by forming a coating layer composed of a resin excellent in heat resistance. However, the heat resistance and adhesion of the coating layer are not sufficient, and bag forming suitability is still not sufficient.

Related Art Documents

Patent Documents

Patent Document 1: Japanese Patent Application Laid-Open No. 2020-055157
Patent Document 2: International Patent Application Publication No. 2022/230812

SUMMARY OF INVENTION

Problem to Be Solved by Invention

As described above, conventional laminates using polyolefin-based resins do not have sufficient heat resistance, bag forming suitability, and adhesion, and improvements are desired.

Therefore, an objective of the present invention is to provide a laminate excellent in heat resistance, bag forming suitability, and adhesion.

Means for Solving Problem

An embodiment of the present invention relates to a laminate sequentially including a base material 1, an adhesive layer, and a base material 2 and further including a coating layer. The base material 1 and the base material 2 each contain a polyolefin-based resin. The coating layer contains a resin (A) having a glass transition point of 115°C or higher. A shrinkage rate of the laminate represented by (Formula 1) below is 30 area% or less upon heating and pressurizing under heating and pressurizing conditions below:

(heating and pressurizing conditions)
heating temperature: 145°C, pressurization: 2 kg/cm$^2$, heating and pressurizing time: 1 second,

Shrinkage rate (area%) = {1 - (area after heating and pressurizing) / (area before heating and pressurizing)} × 100. (Formula 1)

Another embodiment of the present invention relates to a laminate including a coating layer and a base material 1. The base material 1 contains a polyethylene resin. The coating layer contains a resin (A) having a glass transition point of 115°C or higher. A shrinkage rate of the laminate represented by (Formula 1) below is 30 area% or less upon heating and pressurizing under heating and pressurizing conditions below:

(heating and pressurizing conditions)
heating temperature: 145°C, pressurization: 2 kg/cm$^2$, heating and pressurizing time: 1 second,

Shrinkage rate (area%) = {1 - (area after heating and pressurizing) / (area before heating and pressurizing)} × 100. (Formula 1)

Another embodiment of the present invention relates to a method for producing a laminate, which is a method for producing a laminate sequentially including a base material 1, an adhesive layer, and a base material 2 and further including a coating layer. The method includes: a step of printing a coating agent containing a resin (A) having a glass transition point of 115°C or higher onto one surface of the base material 1 to form the coating layer; a step of printing an adhesive onto the other surface of the base material 1 or onto the coating layer to form the adhesive layer; and a step of bonding the base material 2 onto the adhesive layer. A shrinkage rate of the laminate represented by (Formula 1) below is 30 area% or less upon heating and pressurizing under heating and pressurizing conditions below:

(heating and pressurizing conditions)
heating temperature: 145°C, pressurization: 2 kg/cm$^2$, heating and pressurizing time: 1 second,

Shrinkage rate (area%) = {1 - (area after heating and pressurizing) / (area before heating and pressurizing)} × 100. (Formula 1)

Another embodiment of the present invention relates to a coating agent used for forming a coating layer of a laminate sequentially including a base material 1, an adhesive layer, and a base material 2 and further including the coating layer. The base material 1 and the base material 2 contain a polyolefin-based resin. The coating agent includes a resin (A) having a glass transition point of 115°C or higher, and a solvent.

Effects of Invention

According to the present invention, a laminate excellent in heat resistance, bag forming suitability, and adhesion can be provided.

BRIEF DESCRIPTION OF THE DRAWINGS

[FIG. 1] FIG. 1 is a plan view illustrating a method for measuring a shrinkage rate of a laminate in heating and pressurizing, and represents an area before heating and pressurizing in the case of heating and pressurizing a laminate cut to 50 mm × 25 mm in a range of 20 mm × 10 mm.
[FIG. 2] FIG. 2 is a plan view illustrating the method for measuring the shrinkage rate of the laminate in heating and pressurizing, and represents an area after heating and pressurizing in the case of heating and pressurizing the laminate cut to 50 mm × 25 mm in the range of 20 mm × 10 mm.

EMBODIMENTS FOR IMPLEMENTING INVENTION

Hereinafter, embodiments of the present invention will be described in detail. However, the descriptions of constituent requirements described below are examples of embodiments of the present invention, and the present invention is not limited to these contents as long as it does not exceed the gist thereof.

<1> Laminate

In an embodiment, the laminate is a laminate sequentially having a base material 1, an adhesive layer, and a base material 2, and further having a coating layer. The base material 1 and the base material 2 contain a polyolefin-based resin, and a shrinkage rate of the laminate represented by (Formula 1) below is 30 area% or less upon heating and pressurizing under heating and pressurizing conditions below.

(Heating and Pressurizing Conditions)
Heating temperature: 145°C, pressurization: 2 kg/cm$^2$, heating and pressurizing time: 1 second

$$\text{Shrinkage rate (area\%)} = \{1 - (\text{area after heating and pressurizing}) / (\text{area before heating and pressurizing})\} \times 100 \qquad \text{(Formula 1)}$$

The shrinkage rate is preferably 30 area% or less, more preferably 15 area% or less, and even more preferably 5 area% or less.
In another embodiment, the laminate is a laminate having a coating layer and a base material 1. The base material 1 contains a polyethylene resin, and a shrinkage rate of the laminate represented by (Formula 1) below is 30 area% or less upon heating and pressurizing under heating and pressurizing conditions below.

(Heating and Pressurizing Conditions)
Heating temperature: 145°C, pressurization: 2 kg/cm$^2$, heating and pressurizing time: 1 second

$$\text{Shrinkage rate (area\%)} = \{1 - (\text{area after heating and pressurizing}) / (\text{area before heating and pressurizing})\} \times 100 \qquad \text{(Formula 1)}$$

The shrinkage rate is preferably 30 area% or less, more preferably 15 area% or less, and even more preferably 5 area% or less.
By setting the shrinkage rate of the laminate within the above range, a laminate excellent in heat resistance against heating and pressurizing as in a heat sealing process or the like and excellent in bag forming suitability and adhesion can be obtained.

<Configuration of Laminate>

As the configuration of the laminate, specifically, the following configurations may be exemplified, but the present invention is not limited thereto. In the configurations of (1) to (4) described below, "/" refers to the boundary of each layer.

(1) coating layer/base material 1/adhesive layer/base material 2
(2) base material 1/coating layer/adhesive layer/base material 2
(3) base material 1/adhesive layer/coating layer/base material 2
(4) coating layer/base material 1

In the laminate of the present embodiment, the coating layer is preferably adjacent to the base material 1, and the coating layer is preferably located on the outermost layer of the laminate. With the laminate having this configuration, shrinkage of the laminate is suppressed by the coating layer, and a laminate further excellent in heat resistance and bag forming suitability can be provided. Further, in a structure in which the base material 1 and the base material 2 are laminated via an adhesive layer, the coating layer is preferably adjacent to at least one of the base material 1 and the base material 2. The coating layer is preferably adjacent to the base material 1, and is more preferably provided on one surface of the base material 1 and constitutes the outermost surface of the laminate.
As the base material 1 and the base material 2, a film of a polyolefin-based resin such as polyethylene and polypropylene (hereinafter also referred to as a polyolefin film or a polyolefin base material) may be suitably used. The base material 1 and the base material 2 may be the same material or different materials, but from the viewpoint of recyclability, the base material 1 and the base material 2 are preferably the same material. Among the embodiments satisfying the requirement for the shrinkage rate of the laminate described above, the following aspects are listed as preferable examples of the laminated configuration.

- coating layer/polyethylene film/adhesive layer/polyethylene film
- coating layer/polypropylene film/adhesive layer/polypropylene film
- coating layer/polyethylene film
- coating layer/polypropylene film
- polyethylene film/coating layer/adhesive layer/polyethylene film
- polypropylene film/coating layer/adhesive layer/polypropylene film

Among the above laminated configurations, from the viewpoint of shrinkage suppression, configurations in which the coating layer is on the outermost layer are particularly preferable.

In addition, from the viewpoint of recyclability, coloration (color change) due to heating of the laminate is preferably small. In some embodiments, in the case of heating the laminate at 200°C, a color change $\Delta E$ of the laminate before and after heating is preferably 30 or less, more preferably 20 or less, and even more preferably 10 or less. Since the color change of the laminate before and after heating can be easily adjusted to the above range with the coating layer, the recyclability of the film can be easily improved. The color change $\Delta E$ may be measured according to conventional methods in the art. For example, a method described in Examples (to be described later) may be applied.

As an embodiment satisfying the above requirement for the shrinkage rate of the laminate, the coating layer may have a binder resin (hereinafter referred to as a resin) and/or a particle as main components. "Main components" means being present at a content ratio of 50 mass% or more with respect to the total mass of the coating layer. In some embodiments, the coating layer preferably contains at least a resin, preferably contains a resin and a particle, and more preferably contains a resin and an inorganic particle. The resin contained in the coating layer may be a film-forming resin known as a binder resin, but preferably contains a resin (A) having a glass transition point of 115°C or higher. The resin (A) more preferably has a glass transition point of 120°C or higher.

In some embodiments, the resin (A) more preferably contains a resin having a ring structure such as a cellulose-based resin, and more preferably contains at least one selected from the group consisting of nitrocellulose, cellulose acetate, cellulose acetate propionate, and cellulose acetate butyrate.

In some embodiments, the coating layer preferably further contains a particle. The particle is not particularly limited, but preferably contains at least one selected from the group consisting of silica, calcium carbonate, barium sulfate, titanium oxide, and zinc oxide, and more preferably contains barium sulfate.

In the above embodiments, the coating layer is excellent in adhesion to the polyolefin base material, has low flow of the coated film during heating, and can greatly suppress thermal shrinkage of the polyolefin base material. Therefore, it becomes easy to satisfy the shrinkage rate represented by Formula (1) above.

As a particularly preferable embodiment satisfying the above requirement for the shrinkage rate of the laminate, preferably, the laminate has the configuration of (1) or (4) illustrated above, and the coating layer contains a resin and an inorganic particle. More preferably, the laminate has the configuration of (1) or (4) above, and the coating layer contains a resin (A) having a glass transition point of 120°C or higher and an inorganic particle. Even more preferably, the laminate has the configuration of (1) or (4) above, and the coating layer contains a resin having a ring structure and an inorganic particle. Particularly preferably, the laminate has the configuration of (1) or (4) above, and the coating layer contains a cellulose-based resin and at least one selected from the group consisting of silica, calcium carbonate, barium sulfate, titanium oxide, and zinc oxide.

<Peak Temperature of Loss Tangent>

In the laminate of the present embodiment, regarding a peak temperature of loss tangent (tan$\delta$) measured at 80°C to 200°C based on JIS K 7244, a difference between the peak temperature of loss tangent (tan$\delta$) of the laminate and the peak temperature of tan$\delta$ of the laminate excluding the coating layer as shown in (Formula 2) below is preferably 1.0°C or more. To satisfy the peak temperature difference of tan$\delta$, the embodiment is preferably the same embodiment as the shrinkage rate described above.

With the difference in peak temperature of tan$\delta$ between the laminate and the laminate excluding the coating layer being the above numerical value, since the coating layer does not flow during heating, the shrinkage rate represented by Formula (1) above is reduced, and the laminate is excellent in heat resistance and bag forming suitability.

Difference in peak temperature of tan$\delta$ = (Peak temperature of tan$\delta$ of laminate having coating layer) - (Peak temperature of tan$\delta$ of laminate excluding coating layer)　　(Formula 2)

Since the coating layer adheres to the polyolefin base material and has low flow of the coated film during heating, the shrinkage rate of the laminate can be reduced. With the above effect, it is thought that the laminate of the present embodiment can realize improvements in heat resistance, bag forming suitability, adhesion, and blocking resistance at high levels. This description is based simply on technical considerations and does not limit the invention in any manner.

<Coating Layer>

The coating layer may be formed by printing a coating agent and removing volatile components. In some embodiments, the laminate of the present embodiment can be easily configured using a coating agent to be described later. The coating layer is preferably a heat-resistant coating layer, and the heat-resistant coating layer adheres to the polyolefin base material, has low flow of the coated film during heating, and can suppress thermal shrinkage of the polyolefin base material. Therefore, the shrinkage rate represented by Formula (1) above can be reduced, and heat resistance and bag forming suitability can be imparted to the laminate.

A film thickness of the coating layer is preferably 0.3 to 5 $\mu$m, more preferably 0.5 to 3 $\mu$m, and even more preferably 0.5 to 2 $\mu$m. In the case where the film thickness of the coating layer is in the above range, heat resistance and bag forming suitability become good.

In some embodiments, the resin constituting the coating layer preferably contains a resin (A) having a glass transition point of 115°C or higher. The glass transition point of the resin (A) may be 120°C or higher, 130°C or higher, or 140°C or higher. The glass transition point of the resin (A) may be 220°C or lower, 210°C or lower, or 200°C or lower. In some embodiments, the glass transition point of the resin (A) is more preferably 120°C to 220°C, even more preferably 130°C to 210°C, and particularly preferably 140°C to 200°C.

In the case where the glass transition point of the resin constituting the coating layer is 115°C or higher, and more preferably 120°C or higher, there are tendencies that excellent heat resistance is exhibited, the shrinkage rate represented by Formula (1) above is reduced, and the heat resistance and bag forming suitability of the laminate during heating can be easily improved. In addition, in the case where the glass transition point of the resin constituting the coating layer is 220°C or lower, there are tendencies that the coating layer easily adheres to the base material, and the adhesion and heat resistance of the laminate can be easily improved.

<Coating Agent>

An embodiment of the present invention relates to a coating agent including a binder resin containing a resin (A) having a glass transition point of 115°C or higher, and a solvent. The coating agent preferably further contains a particle. The coating agent of the present embodiment may be suitably used to constitute the above laminate, and may be more suitably used to form the coating layer of the above laminate. Hereinafter, the configuration of the coating agent will be described.

[Resin (A)]

The coating agent contains, as a binder resin, a resin (A) having a glass transition point of 115°C or higher. The glass transition point of the resin (A) is preferably 120°C to 250°C, more preferably 120°C to 220°C, even more preferably 130°C to 210°C, and particularly preferably 140°C to 200°C. By containing the resin (A) having a glass transition point of 115°C or higher, and more preferably 120°C or higher, the coating layer exhibits excellent heat resistance and reduces the shrinkage rate represented by Formula (1) above, and the heat resistance and bag forming suitability of the laminate during heating become good. In addition, with the glass transition point of the resin (A) being 250°C or lower, the coating layer adheres to the base material, so the adhesion and heat resistance of the laminate also become good.

In the present specification, the glass transition point (glass transition temperature) is a value measured by a DSC (differential scanning calorimeter). The resin (A) having a glass transition point of 115°C or higher may be one resin or a combination of two or more resins. In the case of a resin that does not have a glass transition point, it may be any resin having a softening point or a melting point of 115°C or higher, and in the present specification, such a resin is also included in the resin (A) having a glass transition point of 115°C or higher. In the case where the resin (A) is a combination of two or more types, the glass transition point of the resin (A) becomes a weighted average value calculated based on the blending ratio of the two or more resins. That is, the glass transition point of the resin (A), as a weighted average value, is preferably 115°C or higher, more preferably 120°C to 250°C, even more preferably 120°C to 220°C, particularly preferably 130°C to 210°C, and most preferably 140°C to 200°C.

A content ratio of the resin (A) is preferably 50 mass% or more, more preferably 60 mass% or more, and even more preferably 70 to 95 mass%, based on the mass of the total solid content in the coating agent (in 100 mass% of the coating layer). With the content ratio of the resin (A) being in the above range, the heat resistance and bag forming suitability of the laminate become good.

A mass average molecular weight (Mw) of the resin (A) is preferably 13,000 to 70,000. The mass average molecular weight is more preferably 13,000 to 50,000, and even more preferably 13,000 to 40,000. With the mass average molecular weight of the resin (A) being 13,000 or more, excellent heat resistance is exhibited, and the heat resistance and bag forming suitability of the laminate become good. On the other hand, with the mass average molecular weight of the resin (A) being 70,000 or less, since the solid content of the coating agent can be increased, the film thickness of the heat-resistant coating layer can be set to an appropriate range, and the bag forming suitability of the laminate is improved. The mass average molecular weight is measured according to gel permeation chromatography (GPC). In the case where the resin (A) contains two or more resins, the mass average molecular weight of the resin (A) is a weighted average value calculated based on the blending ratio of the two or more resins (A).

Examples of the resin (A) preferably include urethane resin, acrylic resin, epoxy resin, polyolefin resin, polyester resin, polyamide resin, polyimide resin, polyamideimide resin, cellulose-based resin, and a composite resin obtained by combining the above resins. Among these, a resin having a ring structure such as a cellulose-based resin is preferable. The resin (A) may contain one or two or more of the above resins. Among these, in some embodiments, from the viewpoint of heat resistance and adhesion, the resin (A) preferably contains a resin having a ring structure.

In some embodiments, the resin (A) is preferably one or two resins having a ring structure, and more preferably a cellulose-based resin. In some embodiments, from the viewpoint of heat resistance and adhesion, the resin (A) is preferably a combination of a resin having a ring structure and a polyamide resin, and more preferably a combination of a cellulose-based resin and a polyamide resin. By using the resin (A), both heat resistance and base material adhesion are achieved, and it becomes easy to satisfy the thermal shrinkage rate of Formula 1.

(Resin Having Ring Structure)

The resin having a ring structure may be any resin having a structure of aromatic hydrocarbon such as a pyranose ring and a benzene ring, or alicyclic hydrocarbon such as cycloalkane. By having the above ring structure, heat resistance tends to improve. Examples of the resin having a ring structure include cellulose-based resin, polyimide resin, polyamideimide resin, etc., and, in addition, may also be a copolymer with a monomer having a ring structure such as an aromatic hydrocarbon-based monomer or an alicyclic hydrocarbon-based monomer among the resins described above as examples of the resin (A). Among these, as the resin having a ring structure, from the viewpoint of heat resistance, a cellulose-based resin is preferable.

Specific examples of the monomer having a ring structure include, but are not limited to, styrene, $\alpha$-methyl-styrene, $\beta$-methylstyrene benzyl acrylate, cyclohexyl acrylate, cyclobutanediol, cyclopentanediol, 1,4-cyclohexanediol, cycloheptanediol, 1,5-cyclooctanediol, 1,4-cyclohexanedimethanol, etc.

(Cellulose-based Resin)

Examples of the cellulose-based resin include nitrocellulose, cellulose acetate, cellulose acetate propionate, cellulose acetate butyrate, methyl cellulose, ethyl cellulose, hydroxypropyl cellulose, hydroxyethyl cellulose, and carboxymethyl cellulose. In some embodiments, the cellulose-based resin is preferably one or more selected from the group consisting of nitrocellulose, cellulose acetate, cellulose acetate propionate, and cellulose acetate butyrate, and more preferably one or more selected from the group consisting of nitrocellulose, cellulose acetate propionate, and cellulose acetate butyrate. These cellulose-based resins may be used as one type alone or used as a combination of two or more types.

A content ratio of the resin having a ring structure is preferably 30 mass% or more, more preferably 40 mass% or more, even more preferably 50 mass% or more, particularly preferably 60 mass% or more, and most preferably 70 to 95 mass%, based on the mass of the total solid content in the coating agent (in 100 mass% of the coating layer). With the content ratio of the resin having a ring structure such as a cellulose-based resin being within the above range, the heat resistance and bag forming suitability of the laminate become good.

A content ratio of the nitrocellulose in the coating layer is preferably 10 mass% or less, more preferably 5 mass% or less, and still more preferably 1 mass% or less. With the content ratio of the nitrocellulose in the coating layer being within the above range, the coloring property after heating becomes good.

In some embodiments, the content ratio of the cellulose-based resin may be 55 mass% or more in 100 mass% of the resin (A). The above content is preferably 60 mass% or more, more preferably 70 mass% or more, even more preferably 80 mass% or more, and particularly preferably 90 mass% or more. With the content ratio of the cellulose-based resin being within the above range, the heat resistance and bag forming suitability of the laminate become good.

[Resin (B)]

In some embodiments, the coating agent preferably contains, as the binder resin, a resin (A) having a glass transition point of 115°C or higher and a resin (B) having a glass transition point of less than 115°C. The glass transition point of the resin (B) is preferably 100°C or lower, more preferably 90°C or lower, and even more preferably 80°C or lower. The glass transition point of the resin (B) is preferably -50°C or higher, more preferably -30°C or higher, and even more preferably -10°C or higher. In the case where the binder resin further contains the resin (B), the glass transition point of the binder resin calculated as a weighted average value with the resin (A) is preferably 115°C or higher, more preferably 120°C to 250°C, even more preferably 120°C to 220°C, particularly preferably 130°C to 210°C, and most preferably 140°C to 200°C.

Specific examples of the resin (B) include urethane resin, acrylic resin, epoxy resin, polyolefin resin, polyester resin, polyamide resin, polyimide resin, polyamideimide resin, vinyl chloride-vinyl acetate copolymer resin, polyvinyl butyral resin, and a composite resin obtained by combining the above resins, and may include one or two or more of the above. Among these, from the viewpoint of adhesion to the olefin base material and heat resistance, the resin (B) preferably contains at least one selected from the group consisting of urethane resin, polyvinyl butyral resin, and polyamide resin, and is more preferably urethane resin and/or polyvinyl butyral resin.

In the case where the coating agent contains the resin (B), the content of the resin (B) is preferably 20 mass% or less, more preferably 1 to 15 mass%, and even more preferably 2 to 10 mass%, based on the mass of the total solid content in the coating agent (in 100 mass% of the coating layer). With the content ratio of the resin (B) being within the above range, the adhesion and heat resistance of the laminate become good.

A mass average molecular weight of the resin (B) is preferably 5,000 to 200,000, more preferably 8,000 to 150,000, and even more preferably 10,000 to 100,000. With the mass average molecular weight of the resin (B) being within the above range, excellent adhesion and heat resistance are exhibited, and the heat resistance and bag forming suitability of the laminate become good. The mass average molecular weight is measured according to gel permeation chromatography (GPC).

In some embodiments, in the case where the binder resin constituting the coating agent is a combination of two or more resins, a difference in Hansen solubility parameter (HSP) of the two resins may be taken as an index of mutual solubility.

The HSP is an index showing the solubility of a substance, and is expressed by a dispersion term $\delta d$, a polar term $\delta p$, and a hydrogen bonding term $\delta h$. The HSP difference (Ra) of two substances is expressed as Ra = $\{4 \times \Delta\delta d2 + \Delta\delta p2 + \Delta\delta h2\}^{1/2}$, based on a dispersion term difference $\Delta\delta d$, a polar term difference $\Delta\delta p$, and a hydrogen bonding term difference $\Delta\delta h$ between the two substances. The smaller Ra is, the higher the compatibility is, and the larger Ra is, the lower the compatibility is.

Details of the Hansen solubility parameter are described in Hansen Solubility Parameters; A Users Handbook, written by Charles M. Hansen (CRC Press, 2007). For substances with values unknown in the literature and the like, calculation may be performed using solubility tests of the substance in multiple solvents and conventional computer software such as Hansen Solubility Parameters in Practice (HSPiP).

The combination of two resins may be, for example, a combination of two resins (A), and as a specific example, may be a combination of a cellulose-based resin and polyamide. As another example, it may also be a combination of the resin (A) and the resin (B). Although not particularly limited, the combination of the resin (A) and the resin (B) is preferable. In some embodiments, the HSP difference in the two resins is preferably 14 to 21, more preferably 15 to 21, and may even more preferably be 16 to 21.

In the case where the HSP difference is within the above range, it becomes easy to form a microphase-separated structure. In particular, in the case where the HSP difference between the resin (A) and the resin (B) is within the above range, with the microphase-separated resin (B) adhering to the base material surface, there are tendencies that the adhesion between the coating layer and the base material is further improved, and heat resistance is further improved by the microphase-separated resin (A). The above description is based on technical considerations, and the present invention is not limited by the theory.

[Particle]

The coating agent forming the coating layer preferably contains a particle. With the coating layer containing a particle, heat resistance and bag forming suitability are improved. Both an organic particle and an inorganic particle may be used as the particle, but from the viewpoint of heat resistance, the particle is preferably an inorganic particle.

A content ratio of the particle is preferably 1 to 90 mass%, more preferably 5 to 70 mass%, and even more preferably 10 to 60 mass%, based on the mass of the total solid content in the coating agent (in 100 mass% of the coating layer). In the case where the content ratio of the particle is within the above range, heat resistance and bag forming suitability are improved.

An average particle diameter of the particle is preferably 3,000 nm or less, and more preferably 10 to 1,000 nm. In some embodiments, the average particle diameter of the particle is preferably 10 to 500 nm, more preferably 20 to 300 nm, and even more preferably 30 to 150 nm. In the present specification, the average particle diameter is measured according to a dynamic light scattering method, and a peak of the obtained volume particle diameter distribution (histogram) is taken as the average particle diameter.

(Inorganic Particle)

In some embodiments, the coating agent forming the coating layer preferably contains an inorganic particle. With the coating layer containing an inorganic particle, the shrinkage rate represented by Formula (1) above is reduced, and the heat resistance and bag forming suitability of the laminate are improved.

Examples of the inorganic particle include extender pigments such as silica, calcium carbonate, barium sulfate, and silicon dioxide, and metal oxides such as titanium oxide, zinc oxide, iron oxide, and aluminum oxide, and one or two or more of the above may be contained. In particular, from the viewpoint of heat resistance and bag forming suitability, the coating layer preferably contains one or more selected from the group consisting of calcium carbonate, barium sulfate, titanium oxide, and zinc oxide. The coating layer more preferably contains one or more selected from the group consisting of calcium carbonate, barium sulfate, and zinc oxide, and even more preferably contains barium sulfate.

A content ratio of the inorganic particle is preferably 1 to 90 mass%, more preferably 5 to 70 mass%, and even more preferably 10 to 60 mass%, based on the mass of the total solid content in the coating agent (in 100 mass% of the coating layer). In the case where the content ratio of the inorganic particle is within the above range, heat resistance and bag forming suitability are improved.

An average particle diameter of the inorganic particle is preferably 3,000 nm or less, and more preferably 10 to 1,000 nm. In some embodiments, the average particle diameter of the inorganic particle is preferably 10 to 500 nm, more preferably 20 to 300 nm, and even more preferably 30 to 150 nm.

In some embodiments, an oil absorption of the particle is preferably 100 ml/100 g or less, more preferably 50 ml/100 g or less, and even more preferably 30 ml/100 g or less. The oil absorption may be measured based on JIS K5101-13-1.

In some embodiments, a refractive index of the particle is preferably 2.5 or less, more preferably 2.0 or less, and even more preferably 1.8 or less. In the case of using a particle having a refractive index within the above range, a coating layer excellent in transparency can be easily obtained.

From the viewpoint of forming the coating layer, a mass ratio of the particle to 100 mass% of the resin (A) in the coating agent is preferably 1 to 900 mass%, more preferably 10 to 233 mass%, even more preferably 20 to 150 mass%, and particularly preferably 30 to 100 mass%.

(Organic Particle)

Examples of the organic particle include organic particles such as polyurethane-based resin, polynylon-based resin, polyacrylic resin, polysilicone-based resin, polystyrene-based resin, melamine-based resin, polyester-based resin, polyethylene-based resin, and benzoguanamine-based resin. The particle in the coating agent may contain one or two or more of the above. In addition, the preferable form of the organic particle is the same as the form described above for the inorganic particle.

[Additives]

The coating agent forming the coating layer may contain optional additives such as, for example, an adhesion promoter, a plasticizer, an amide wax, a hydrocarbon wax, and a chelate crosslinking agent. Among these, an adhesion promoter is preferably contained.

[Adhesion Promoter]

The coating agent forming the coating layer preferably contains an adhesion promoter from the viewpoint of improving adhesion with the base material. Examples of the adhesion promoter include chlorinated polyolefin, acid-modified polyolefin, etc., and chlorinated polyolefin is particularly preferable.

[Chlorinated Polyolefin]

A chlorine content ratio of the chlorinated polyolefin is preferably 5 to 60 mass%, more preferably 10 to 50 mass%, and even more preferably 20 to 40 mass%, in 100 mass% of the chlorinated polyolefin. Herein, the chlorine content ratio in the present invention refers to a content mass% of chlorine atoms in 100 mass% of the chlorinated polyolefin. In addition, from the viewpoint of solubility into a mixed solvent such as an ester-based solvent and an alcohol-based solvent, a mass average molecular weight of the chlorinated polyolefin is preferably 5,000 to 80,000, and more preferably 13,000 to 50,000.

In some embodiments, a chlorine atomic mass (mmol/g) may be 1.3 or less, 1.0 or less, or 0.7 or less, or may be 0, based on the total mass of the solid content of the coating agent forming the coating layer.

In the present specification, the chlorinated polyolefin has a structure in which hydrogen of a polymer of α-olefin represented by General Formula (1) below is substituted with chlorine.

General Formula (1)  $CH_2=CH-R$

(In the formula, R is an alkyl group having 1 or more carbon atoms.)

Since the chlorinated polyolefin has an alkyl group, which has flexibility, as a branched structure, it remains in a viscous state even at low temperatures and improves the adhesion of the coating layer with the base material. The polyolefin structure in the chlorinated polyolefin is not particularly limited, but, for example, a resin containing a homopolymer or a copolymer of α-olefin-based unsaturated hydrocarbons such as polypropylene, poly-1-butene, and poly-4-methyl-1-pentene is preferable. Among these, those containing a polypropylene structure (i.e., chlorinated polypropylene structure) are particularly preferable.

[Organic Solvent]

Examples of the organic solvent include non-aromatic organic solvents, including: hydrocarbon-based solvents such as methylcyclohexane and ethylcyclohexane; ketone-based solvents such as acetone, methyl ethyl ketone (MEK), and methyl isobutyl ketone; ester-based solvents such as ethyl acetate, n-propyl acetate, and butyl acetate; and alcohol-based solvents such as methanol, ethanol, propanol, isopropanol (IPA), and butanol. The organic solvent may be any organic solvent appropriately selected in consideration of reducing the amount of solvent remaining in the film after printing or the like, and may be used as one type alone or used as a combination of two or more types. A content of the organic solvent is preferably 30 to 95 mass%, more preferably 50 to 90 mass%, and particularly preferably 70 to 85 mass%, in 100 mass% of the coating agent.

[Method for Producing Coating Agent]

The coating agent for forming the coating layer preferably contains the binder resin and/or the inorganic particle, and furthermore, to improve the handling, heat resistance, and bag forming suitability of the coating agent, optional components such as the adhesion promoter, an organic solvent, a combined resin, and other additives may be added, alone or as a combination of multiple types, to the coating agent. The coating agent may be obtained, for example, by charging a resin solution, in which a resin is dissolved in an organic solvent, and/or an inorganic particle, and an organic solvent into a stirrer equipped with stirring blades, rotating blades, etc., and mixing and stirring the mixture. The stirring speed is not particularly limited and may be 50 to 30,000 rpm.

<Base Material 1 and Base Material 2>

The base material 1 and the base material 2 (to be described later) may be a single layer, may be obtained by simply laminating plastic base materials together, or may be obtained by laminating a base material different from the plastic base material via an adhesive layer or the like. In addition, examples of the "base material different from the plastic base material" include a plastic base material having different properties and a paper base material, with the type thereof not limited. In addition, in the case of a laminated base material, it may be in a form containing an adhesive layer. The method for laminating the base material is not particularly limited, and examples include conventional methods such as co-extrusion manufacturing, heat fusion, and pressure bonding via an adhesive layer.

The base material 1 and the base material 2 (to be described later) are preferably in a form containing additives such as an antistatic agent, an antifogging agent, and an ultraviolet inhibitor by coating or kneading, in a form having a readily adhesive coating layer (e.g., a layer containing polyvinyl alcohol and/or a derivative thereof), in a form in which the surface of the base material is subjected to a corona treatment or a low-temperature plasma treatment, etc. The above addition and processing are also performed for the purpose of improving the wettability of printing inks and other coating agents, or for the purpose of imparting specific functionality to the film, and are also suitably used, for example, to provide a packaging material with excellent visibility of contents by preventing fogging of the packaging material due to moisture.

In some embodiments, the base material 1 preferably contains a polyolefin-based resin. A film of a polyolefin-based resin may be suitably used. Examples suitably include polypropylene films such as biaxially oriented polypropylene (OPP) films, cast polypropylene (CPP) films, acid-modified polypropylene, and copolymer polypropylene, polyethylene films such as low-density polyethylene (LDPE), linear low-density polyethylene (LLDPE), medium-density polyethylene (MDPE), high-density polyethylene (HDPE), and acid-modified polyethylene, and multilayer films obtained by laminating the above. Among these, films of low-density polyethylene (LDPE), linear low-density polyethylene (LLDPE), medium-density polyethylene (MDPE), and high-density polyethylene (HDPE) are preferable. A thickness of the base material 1 is not particularly limited. In some embodiments, the thickness of the base material 1 may preferably be 5 $\mu$m or more and 150 $\mu$m or less, more preferably 10 $\mu$m or more and 70 $\mu$m or less.

In some embodiments, the surface of the base material 1 on which the coating layer is formed is preferably subjected to a corona treatment. An elemental ratio of oxygen on the corona-treated surface of the base material 1 is preferably 2% or more, more preferably 3% or more, and even more preferably 4% or more.

The elemental ratio of oxygen on the surface of the base material 1 is a composition ratio of oxygen atoms in narrow measurement of carbon atoms and oxygen atoms using an X-ray photoelectron spectroscopy analyzer. The measurement conditions using the X-ray photoelectron spectroscopy analyzer may be, for example, as follows.

(Measurement Conditions)

- Apparatus: Quantera SXM manufactured by ULVAC PHI
- X-ray source: Monochromatic AlK$\alpha$
- X Ray setting: 100 $\mu$m$\phi$ [15 kV, 25 W]
- Photoelectron takeoff angle: 45° with respect to sample surface
- Correction of binding energy: The peak derived from C-C bonds in the C1s spectrum is corrected to 285.0 eV
- Charge neutralization conditions: Combined use of electron neutralization gun and Ar ion gun (neutralization mode)

In some embodiments, from the viewpoint of printing suitability and processability, the base material 1 is preferably a uniaxially oriented base material or a biaxially oriented base material. The uniaxially oriented base material is a film stretched in a machine direction (MD). The uniaxially oriented base material may be obtained according to an appropriate film forming method, but is preferably obtained by stretching a sheet shaped according to a T-die method. A preferable stretch ratio of the uniaxially oriented base material in the machine direction (MD) is 2 to 10 times, and more preferably 2 to 8 times. The biaxially oriented base material is a film stretched in the machine direction (MD) and a transverse direction (TD).

The film usable as the base material may generally be formed by shaping according to the T-die method, stretching in the machine direction (MD), and then stretching in the transverse direction (TD), in a manner similar to a base material film of a conventional lamination film. The stretching in the biaxial directions may be sequential biaxial stretching described above or simultaneous biaxial stretching, and either may be used favorably. A preferable stretch ratio of the biaxially oriented base material in the machine direction (MD) is 2 to 10 times, and more preferably 2 to 8 times. A preferable stretch ratio in the transverse direction (TD) is 2 to 10 times, and more preferably 4 to 10 times.

When a stretched film is heated and pressurized, a force acts to return from the stretched state to the pre-stretched state. Therefore, films with higher stretch ratios tend to have larger thermal shrinkage rates, but the stretching direction does not affect the thermal shrinkage rate. For example, if the thermal shrinkage rate is satisfied in the stretching direction of a uniaxially oriented film, the thermal shrinkage rate will be satisfied in the non-stretching direction (direction perpendicular to the stretching direction) of the uniaxially oriented film.

The polyolefin contained in the base material 1 preferably has a density of 0.860 to 0.970 g/cm$^3$. Specifically, examples of the polyethylene include an ethylene homopolymer or a copolymer component of ethylene and olefin comonomer having a density of 0.940 to 0.970 g/cm$^3$ and an MFR of 0.1 to 10 g/10 min, and a copolymer component of ethylene and olefin comonomer having a density of 0.860 to 0.926 g/cm$^3$ and an MFR of 1.0 to 30.0 g/10 min.

The base material 2 contains a polyolefin-based resin and may be the same as or different from the base material 1, but is preferably a sealant layer. The sealant layer refers to a layer having heat sealability. The base material 2 is preferably located on the outermost layer of the laminate. As the polyolefin-based resin contained in the base material 2, the recitation in the description about the base material 1 above may apply herein. Among these, as the base material 2, a cast polypropylene (CPP) film, low-density polyethylene (LDPE), linear low-density polyethylene (LLDPE), medium-density polyethylene (MDPE), and high-density polyethylene (HDPE) are preferable. A melting point of the base material 2 is preferably 80°C to 140°C, and more preferably 90°C to 120°C. A film thickness of the base material 2 is preferably 20 to 200 $\mu$m, more preferably 20 to 100 $\mu$m, and even more preferably 20 to 60 $\mu$m.

Although not particularly limited, in the combination of the base material 1 and the base material 2, the base material 1 may be a uniaxially oriented polyethylene film, a biaxially oriented polyethylene film, a cast high-density polyethylene film, or a biaxially oriented polypropylene film, and the base material 2 may be cast linear low-density polyethylene or cast polypropylene.

<Adhesive Layer>

The laminate of the present embodiment contains an adhesive layer. The constituent components of the adhesive layer are not particularly limited, and suitable examples include dry lamination adhesives and non-solvent lamination adhesives such as olefin-based adhesives, acrylic adhesives, ethylene-vinyl acetate copolymer-based adhesives, and reactive urethane adhesives, imine-based anchor coating agents, butadiene-based anchor coating agents, isocyanate-based anchor coating agents, and thermoplastic resins used in extrusion lamination.

In some embodiments, the adhesive layer preferably contains a reaction product of a reactive urethane adhesive composed of polyisocyanate and polyol. The adhesive layer may contain an inorganic compound for the purpose of improving the barrier properties of the laminate.

A film thickness of the adhesive layer is preferably 0.5 $\mu$m or more and 20 $\mu$m or less, more preferably 0.8 $\mu$m or more and 5 $\mu$m or less, and even more preferably 1.0 $\mu$m or more and 4.5 $\mu$m or less.

A mass average molecular weight (Mw) of the polyol is preferably 2,000 to 80,000, more preferably 5,000 to 60,000, and even more preferably 10,000 to 60,000.

In addition, by using a polyol having a molecular weight distribution (Mw/Mn) of 1.5 to 10, the leveling properties during adhesive coating and the lamination strength between each layer can be improved. In particular, in the case where the polyol contains a structural unit derived from polyether polyol, the molecular weight distribution (Mw/Mn) thereof is preferably 3.0 to 10.0, and more preferably 3.0 to 8.0. In the case of containing a structural unit derived from polyester polyol, the molecular weight distribution (Mw/Mn) thereof is preferably 1.5 to 5.0, and more preferably 2.0 to 4.0.

An acid value of the polyol is not particularly limited, but is preferably 0 to 50 mgKOH/g, and more preferably 0 to 40 mgKOH/g. A hydroxyl value of the polyol is not particularly limited, but is preferably 1 to 200 mgKOH/g, and more preferably 3 to 150 mgKOH/g.

[Isocyanate Curing Agent]

The isocyanate curing agent functions as a curing agent in the reactive adhesive, and may be used without limitation as long as it is for general two-component reactive adhesives and contains functional groups having reactivity with hydroxyl groups. By having isocyanate groups, the adhesive strength and agglomeration force of the adhesive become high, and curing is possible at low temperatures around room temperature.

As the isocyanate curing agent, diisocyanate or urethane prepolymer, which is a reaction product of diisocyanate and polyol, is preferable.

As the diisocyanate, various conventional aromatic, aliphatic, or alicyclic diisocyanates may be used. Examples include 1,5-naphthylene diisocyanate, 4,4'-diphenylmethane diisocyanate, 4,4'-diphenyldimethylmethane diisocyanate, 4,4'-dibenzyl isocyanate, dialkyl diphenylmethane diisocyanate, tetraalkyl diphenylmethane diisocyanate, 1,3-phenylene diisocyanate, 1,4-phenylene diisocyanate, tolylene diisocyanate, butane-1,4-diisocyanate, hexamethylene diisocyanate, isopropylene diisocyanate, methylene diisocyanate, 2,2,4-trimethylhexamethylene diisocyanate, 2,4,4-trimethylhexamethylene diisocyanate, cyclohexane-1,4-diisocyanate, xylylene diisocyanate, isophorone diisocyanate, lysine diisocyanate, dicyclohexylmethane-4,4'-diisocyanate, 1,3-bis(isocyanatemethyl)cyclohexane, methylcyclohexane diisocyanate, m-tetramethylxylylene diisocyanate, and dimer diisocyanate obtained by converting the carboxyl groups of dimer acid to isocyanate groups. The above may be used alone or as a combination of two or more types.

In the adhesive layer, a functional group equivalent ratio NCO/OH of hydroxyl groups derived from polyol and isocyanate groups derived from isocyanate resin is preferably 1.5 to 8.0, and more preferably 2.0 to 5.0. In addition, other conventional components for adhesives may be blended in the main agent or in the curing agent in the adhesive.

Examples of commercially available polyols usable herein include TM-320 and TM340 manufactured by Toyo-Morton, Ltd. In addition, examples of commercially available isocyanate curing agents usable herein include CAT-13B and CAT-29B manufactured by Toyo-Morton, Ltd.

The laminate of the present embodiment may contain additional layers according to the purpose of use, in addition to the base material 1, the adhesive layer, the base material 2, and the coating layer. For example, the laminate may further include a printing layer, a vapor deposited layer, a barrier layer, an intermediate base material, etc. to be described.

<Printing Layer>

The laminate of the present embodiment may have a printing layer. The printing layer preferably contains a resin and a colorant. The printing layer may be a layer that displays any pictures, patterns, characters, symbols, etc., for the purpose of providing decoration or aesthetic appeal, displaying contents, expiration dates, and manufacturers or sellers, etc.

The printing layer may be a solid printing layer that does not have pictures, patterns, characters, symbols, etc. The method for forming the printing layer is not particularly limited, and the printing layer may be formed using a printing ink. In addition, the printing layer may have a single-layer structure or a multi-layer structure, and may be printed on the surface layer of the laminate. The mass per unit area of the printing layer is preferably 0.1 to 12 g/m$^2$, more preferably 0.5 to 6 g/m$^2$, and even more preferably 1 to 3 g/m$^2$.

<Vapor Deposited Layer and Barrier Layer>

The laminate of the present embodiment may have a vapor deposited layer and/or a barrier layer for the purpose of controlling the gas permeability of the film. The vapor deposited layer is present for the purpose of imparting oxygen barrier properties and/or water vapor barrier properties to the laminate, and examples include vapor deposited layers composed of metal oxides such as aluminum oxide, silicon oxide, magnesium oxide, and tin oxide. The barrier layer is present for the purpose of mainly imparting oxygen barrier properties to the laminate, and preferably contains a polyvinyl alcohol-based resin. As the form of the barrier layer, conventional forms may be used, but a barrier coating layer formed of a barrier coating agent is preferable.

<Intermediate Base Material>

The laminate of the present embodiment may have an intermediate base material. As specific examples of the intermediate base material, similar to the base material 1 and the base material 2, a plastic base material mainly containing a polyolefin-based resin as a raw material is preferable. Examples include polyolefin-based resins such as low-density polyethylene (LDPE), linear low-density polyethylene (LLDPE), medium-density polyethylene (MDPE), high-density polyethylene (HDPE), ethylene-vinyl acetate copolymer, propylene homopolymer, and ethylenepropylene copolymer. In addition, the intermediate base material may be a composite base material obtained according to the co-extrusion manufacturing method. Furthermore, the intermediate base material is preferably the same type (identical) of material as the base material 1 and/or the base material 2, and is more preferably the same type (identical) of material as the base material 1 and the base material 2. Examples of the same type (identical) of materials include combinations of polypropylenes, combinations of polyethylenes, etc.

In the case of having the above additional layers, examples of representative configuration examples of the laminate include the following.

- coating layer/base material 1/printing layer/adhesive layer/base material 2
- coating layer/base material 1/printing layer/barrier layer/adhesive layer/base material 2
- coating layer/base material 1/printing layer/adhesive layer/intermediate base material layer/adhesive layer/base material 2

<2> Method for Producing Laminate

An embodiment of the present invention relates to a method for producing the laminate of the above embodiment. The production method includes a step of printing a coating agent on either one surface or both surfaces of a base material layer 1 to form a coating layer, a step of printing an adhesive on the base material layer 1 or the coating layer to form an adhesive layer, and a step of bonding a base material 2 on the adhesive layer.

<Method for Printing Coating Layer>

The method for forming the coating layer is not particularly limited, and the coating layer may be formed by printing a coating agent according to a conventional printing method and removing volatile components. Examples of the printing method include plateless printing methods such as an inkjet method, a spray method, a dipping method, a slot die method, and a spin coating method; and plate printing methods such as an offset gravure coater, a gravure coater, a doctor coater, a kiss coater, a bar coater, a blade coater, a flexo coater, and a roll coater.

<Method for Forming Adhesive Layer and Method for Adhering Each Layer>

The method for forming the adhesive layer and the method for adhering each layer are not particularly limited, and examples include conventional methods such as an extrusion lamination method, a dry lamination method, and a non-solvent lamination method.

<3> Packaging Material

The laminate of the present embodiment may be suitably used for applications of packaging materials such as packaging bags. A packaging bag may be produced, for example, by folding the sealant layer of the laminate to overlap, further applying pressure with a high-temperature jig to sandwich it, and performing thermal welding (heat sealing). Similarly, the packaging bag may also be produced by stacking two laminates and thermally welding them. Among the packaging bags, the laminate of the present embodiment may be suitably used for applications of packaging bags with gussets, such as gusset bags and stand-up pouches.

The gusset bag may be produced, for example, according to a method described in Japanese Patent Application Laid-Open No. 2020-059535. In a gusset bag, at joint portions for forming the bag shape, since multiple layers of the packaging material overlap, the film thickness increases, making it difficult for heat to transfer to the inside during heat sealing. Therefore, in the production of gusset bags, the heat sealing temperature often needs to be set high to transfer heat to the inside of the joint portions at which the packaging material overlaps. For this reason, in the production of gusset bags, higher heat resistance is required for the packaging material surface, which is in direct contact with the heat sealing jig. Similarly, high heat resistance is required in the production of stand-up pouches. In this regard, since the laminate of the present embodiment has excellent heat resistance, it may be suitably used as a packaging material not only for general packaging bags but also in the case where high heat resistance is required, such as gusset bags.

In recent years, improvement in recyclability of packaging materials has been desired, and packaging materials (laminates) with little coloration due to heating are desired. One method for recycling mono-material packaging materials is heating and melt-kneading using an extruder or the like. Since the heating temperature in this melt-kneading is higher than the heat sealing temperature during packaging bag production, there is a high possibility that resin coloration may occur due to heating during recycling. In contrast, since the laminate of the present embodiment has excellent heat resistance, coloration due to heating and pressurizing during packaging bag production can be easily suppressed, and a packaging material excellent in recyclability can be realized. In some embodiments, in the case where a nitrocellulose resin is contained in the coating layer, there are tendencies that components in the nitrocellulose resin and the base material react due to heat, and the base material undergoes coloration. From such a viewpoint, by adjusting the content of the nitrocellulose resin in the coating layer, it becomes easy to suppress coloration of the base material due to heat.

Examples of the embodiments of the present invention are described below. However, the present invention is not limited to the embodiments described below.

[1] A laminate sequentially having a base material 1, an adhesive layer, and a base material 2, and further having a coating layer, where

the base material 1 and the base material 2 contain a polyolefin-based resin, and
a shrinkage rate of the laminate represented by (Formula 1) below is 30 area% or less upon heating and pressurizing under heating and pressurizing conditions below.
(Heating and Pressurizing Conditions)
Heating temperature: 145°C, pressurization: 2 kg/cm$^2$, heating and pressurizing time: 1 second

Shrinkage rate (area%) = {1 - (area after heating and pressurizing) / (area before heating and pressurizing)} $\times$ 100      (Formula 1)

[2] A laminate having a coating layer and a base material 1, where

the base material 1 contains a polyethylene resin, and
a shrinkage rate of the laminate represented by (Formula 1) below is 30 area% or less upon heating and pressurizing under heating and pressurizing conditions below.
(Heating and Pressurizing Conditions)
Heating temperature: 145°C, pressurization: 2 kg/cm$^2$, heating and pressurizing time: 1 second

Shrinkage rate (area%) = {1 - (area after heating and pressurizing) / (area before heating and pressurizing)} $\times$ 100      (Formula 1)

[3] The laminate according to [1] above, where the polyolefin-based resin is a polyethylene resin.
[4] The laminate according to any one of [1] to [3] above, where a difference between a peak temperature of loss tangent (tan$\delta$) of the laminate and a peak temperature of tan$\delta$ of the laminate excluding the coating layer, measured at 80°C to 170°C based on JIS K 7244, is 1.0°C or more.

[5] The laminate according to any one of [1] to [4] above, where the coating layer contains a resin (A) having a glass transition point of 120°C or higher.

[6] The laminate according to [5] above, where the resin (A) is a cellulose-based resin.

[7] The laminate according to any one of [1] to [6], where the coating layer contains a chlorinated polyolefin resin.

[8] The laminate according to any one of [1] to [7], where the coating layer contains an inorganic particle.

[9] A method for producing a laminate, which is a method for producing a laminate sequentially having a base material 1, an adhesive layer, and a base material 2 and further having a coating layer, the method including:

a step of printing a coating agent to form the coating layer;

a step of printing an adhesive to form the adhesive layer; and

a step of bonding the base material 2 onto the adhesive layer, where

a shrinkage rate of the laminate represented by (Formula 1) below is 30 area% or less upon heating and pressurizing under heating and pressurizing conditions below.

(Heating and Pressurizing Conditions)

Heating temperature: 145°C, pressurization: 2 kg/cm$^2$, heating and pressurizing time: 1 second

Shrinkage rate (area%) = {1 - (area after heating and pressurizing) / (area before heating and pressurizing)} $\times$ 100     (Formula 1)

The disclosure of the present application relates to the subject matter described in Japanese Patent Application No. 2023-126372 filed on August 2, 2023, the entire disclosure of which is incorporated herein by reference.

Examples

Hereinafter, the present invention will be described based on Examples, but the present invention is not limited thereto. "Parts" and "%" in Examples and Comparative Examples refer to "parts by mass" and "mass%" unless otherwise specified.

Various measurement methods are as follows.

<Glass Transition Point>

The glass transition point of the resin was measured by a DSC (differential scanning calorimeter manufactured by TA Instruments). Specifically, approximately 2 mg of a sample obtained by drying a coating agent was weighed on an aluminum pan, the aluminum pan was set in a DSC measurement holder, and a baseline shift toward the endothermic side in a DSC curve obtained under heating conditions of 5°C/min was read to obtain the glass transition point.

<Mass Average Molecular Weight>

The mass average molecular weight was determined as a converted molecular weight using polystyrene as a standard substance by measuring a molecular weight distribution using a gel permeation chromatography (GPC) apparatus (HLC-8220 manufactured by Tosoh Corporation). The measurement conditions are shown below.

(Measurement Conditions)

- Columns: The following columns were connected in series and used.

  TSKgel SuperAW2500 manufactured by Tosoh Corporation

  TSKgel SuperAW3000 manufactured by Tosoh Corporation

  TSKgel SuperAW4000 manufactured by Tosoh Corporation

  TSKgel guardcolumn SuperAWH manufactured by Tosoh Corporation

- Detector: RI (differential refractometer)

- Measurement temperature: column temperature 40°C
- Eluent: tetrahydrofuran
- Flow rate: 1.0 mL/min

<Amine Value>

The amine value is the number of mg of potassium hydroxide equivalent to the amount of hydrochloric acid required to neutralize amino groups contained in 1 g of sample, and was measured in accordance with JIS K 0070. A sample of 0.5 to 2 g was precisely weighed (sample solid content: Sg), and 50 mL of a mixed solution of methanol/methyl ethyl ketone = 60/40 (mass ratio) was added to the precisely weighed sample to dissolve it. Bromophenol blue was added as an indicator to the obtained solution, and the obtained solution was titrated with 0.2 mol/L ethanolic hydrochloric acid solution (titer: f). The point at which the color of the solution changed from green to yellow was taken as the end point, and the amine value was determined using a titration volume (A mL) at this time according to the following formula.

$$(\text{Formula 3})$$

$$\text{Amine value} = (A \times f \times 0.2 \times 56.108) / S \text{ [mgKOH/g]}$$

<Thermal Shrinkage Rate>

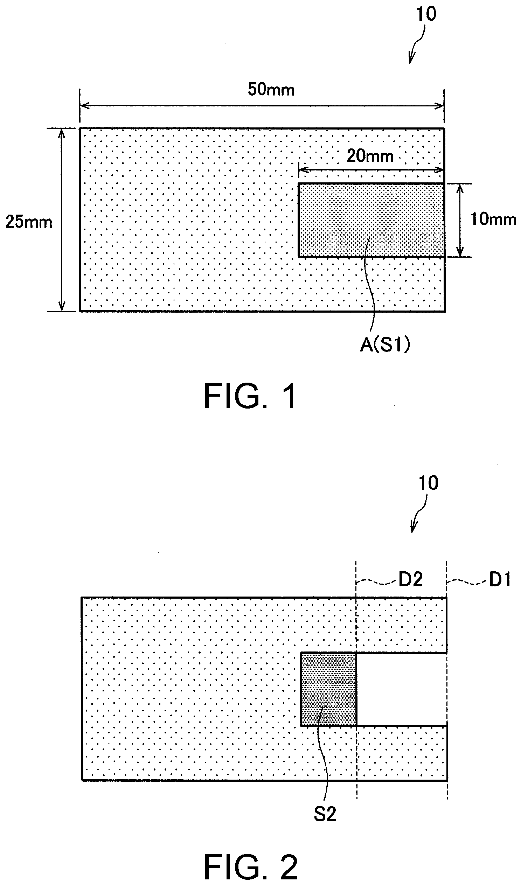

The laminate was cut to 50 mm × 25 mm (in the case where a uniaxially oriented film was included in the base material, the stretching direction was set to the long side 50 mm), and using a heat sealing tester, heating and pressurizing was performed in a range of 20 mm × 10 mm as shown in FIG. 1 and FIG. 2, and the shrinkage rate was calculated according to (Formula 1) below. The heating and pressurizing conditions were: heating temperature: 145°C, pressurization: 2 kg/cm$^2$, heating and pressurizing time: 1 second.

Shrinkage rate (area%) = {1 - (area after heating and pressurizing) / (area before heating and pressurizing)} × 100    (Formula 1)

<Peak Temperature Difference of Loss Tangent>

With respect to the laminate having the coating layer and the laminate excluding the coating layer, the peak temperature of loss tangent (tan$\delta$) was measured at 80°C to 200°C based on JIS K 7244. Next, as shown in (Formula 2) below, the difference between the peak temperature of loss tangent (tan$\delta$) of the laminate having the coating layer and the peak temperature of tan$\delta$ of the laminate excluding the coating layer was calculated.

Difference in peak temperature of tan$\delta$ = (peak temperature of tan$\delta$ of laminate having coating layer) - (peak temperature of tan$\delta$ of laminate excluding coating layer)    (Formula 2)

<Elemental Ratio of Oxygen on Surface of Base Material 1>

As the elemental ratio of oxygen on the surface of the base material 1, narrow measurement of carbon atoms and oxygen atoms was performed using an X-ray photoelectron spectroscopy analyzer to determine the composition ratio of oxygen atoms. The measurement conditions of the X-ray photoelectron spectroscopy analyzer are as follows.

(Measurement Conditions)

- Apparatus: Quantera SXM manufactured by ULVAC PHI
- X-ray source: Monochromatic AlK$\alpha$
- X Ray setting: 100 $\mu$m$\phi$ [15 kV, 25 W]
- Photoelectron takeoff angle: 45° with respect to sample surface
- Correction of binding energy: The peak derived from C-C bonds in the C1s spectrum is corrected to 285.0 eV
- Charge neutralization conditions: Combined use of electron neutralization gun and Ar ion gun (neutralization mode)

<Synthesis of Binder Resin>

[Synthesis Example 1] Synthesis of Urethane Resin A

In a four-neck flask equipped with a stirrer, a thermometer, a reflux condenser, and a nitrogen gas inlet tube, 24.2 parts of polyester polyol, which was a condensate of neopentyl glycol, 1,3-propanediol, adipic acid, and sebacic acid, 4 parts of isophorone diisocyanate, 10 parts of ethyl acetate, and 0.003 parts of tin 2-ethylhexanoate were charged and reacted at 120°C for 6 hours under a nitrogen stream, 14 parts of propyl acetate was added, and the mixture was cooled to obtain a solution of terminal isocyanate prepolymer.

Next, the previously prepared solution of terminal isocyanate prepolymer was gradually added at room temperature to a mixture of 1.7 parts of isophorone diamine, 0.2 parts of n-dibutylamine, 18 parts of ethyl acetate, and 28 parts of isopropyl alcohol. After the addition, the mixture was reacted at 50°C for 1 hour to obtain a urethane resin A solution with a solid content of 30%.

The urethane resin A had a mass average molecular weight of 70,000, an amine value of 4 mgKOH/g, and a glass transition temperature of -42°C.

[Synthesis Example 2] Synthesis of Urethane Resin B

In a four-neck flask equipped with a stirrer, a thermometer, a reflux condenser, and a nitrogen gas inlet tube, 195 parts of Polylite RX-4800 (manufactured by DIC Corporation, polycarbonate polyol, solid content 100%), 5 parts of 1,4-butanediol, 44.2 parts of isophorone diisocyanate, and 61.1 parts of ethyl acetate were charged and reacted at 80°C for 4 hours under a nitrogen stream to obtain a solvent solution of terminal isocyanate prepolymer.

Next, the previously prepared terminal isocyanate prepolymer solution was gradually added at 40°C to a mixture of 8.21 parts of isophorone diamine and 527.9 parts of a mixed solvent of ethyl acetate/isopropanol = 50/50. After the addition, the mixture was reacted at 80°C for 1 hour to obtain a urethane resin B solution with a solid content of 30%.

The urethane resin B had a glass transition point of 40°C, an amine value of 6.0 mgKOH/g, and a weight average molecular weight of 60,000.

[Synthesis Example 3] Synthesis of Urethane Resin C

In a four-neck flask equipped with a stirrer, a thermometer, a reflux condenser, and a nitrogen gas inlet tube, 195 parts of polyester polyol, which was a condensate of adipic acid and 2-methyl-1,5-propanediol, 5 parts of 1,4-butanediol, 44.2 parts of isophorone diisocyanate, and 61.1 parts of ethyl acetate were charged and reacted at 80°C for 4 hours under a nitrogen stream to obtain a solvent solution of terminal isocyanate prepolymer.

Next, the previously prepared terminal isocyanate prepolymer solution was gradually added at 40°C to a mixture of 8.21 parts of isophorone diamine and 527.9 parts of a mixed solvent of ethyl acetate/isopropanol = 50/50. After the addition, the mixture was reacted at 80°C for 1 hour to obtain a urethane resin C solution with a solid content of 30%.

The urethane resin C had a glass transition point of 0°C, an amine value of 7.0 mgKOH/g, and a weight average molecular weight of 59,000.

<Production of Coating Agent>

[Production Example 1] Coating Agent 1

5.0 parts of barium sulfate (average particle diameter: 0.05 μm, solid content 100%, oil absorption 20 ml/100g, refractive index 1.64), 0.1 parts of BYK-111 (manufactured by BYK Chemie, resin having acidic functional groups, solid content 95%), 8.0 parts of ethyl acetate, 1.0 part of 2-propanol, and 1.0 part of propylene glycol monomethyl ether were stirred, mixed, and subjected to dispersion treatment with a bead mill (using zirconia beads).

To the mixture obtained by the above dispersion treatment, 18.0 parts of nitrocellulose resin solution DLX5-8 (manufactured by ICI Novel enterprises, nitrocellulose, nitrogen content 12.0%, solid content 30%, 2-propanol solution) and 0.7 parts of Superchlon 370M (chlorinated polypropylene) were added, stirred, and mixed to obtain a coating agent 1. The glass transition point of the nitrocellulose resin in the coating agent 1 was 130°C.

[Production Examples 2 to 19] Coating Agents 2 to 19

Coating agents 2 to 19 were obtained according to the same method as Production Example 1, except that the raw materials and blending ratios described in Table 1 were used.

Cellulose acetate propionate (CAP), cellulose acetate butyrate (CAB), and cellulose acetate (CA) were each used as a resin solution adjusted to a solid content of 30% using a mixed solvent of ethyl acetate/2-propanol/propylene glycol monomethyl ether = 8/1/1.

Details of the raw materials described in Table 1 used in Production Examples 2 to 19 are shown below. Raw materials not described below are as described in Production Example 1.

(Inorganic Particle)

- Calcium carbonate: average particle diameter: 0.08 $\mu$m, solid content 100%, oil absorption 54 ml/100 g, refractive index 1.9 to 2.0
- Zinc oxide: average particle diameter: 0.1 $\mu$m, solid content 100%, oil absorption 32 ml/100 g, refractive index

(Binder Resin)

- S-2800: polyamide resin manufactured by Kao Corporation, glass transition point 115°C, mass average molecular weight 3,500 (solid content 30%, 2-propanol/toluene = 30/70 solution)
- CAP-482-0.5: cellulose acetate propionate manufactured by Eastman Corporation, glass transition point 142°C, mass average molecular weight 25,000
- CAP-504-0.2: cellulose acetate propionate manufactured by Eastman Corporation, glass transition point 159°C, mass average molecular weight 15,000
- CAP-482-20: cellulose acetate propionate manufactured by Eastman Corporation, glass transition point 147°C, mass average molecular weight 75,000
- CAB-553-0.4: cellulose acetate butyrate manufactured by Eastman Corporation, glass transition point 136°C, mass average molecular weight 20,000
- CAB-531-1: cellulose acetate butyrate manufactured by Eastman Corporation, glass transition point 115°C, mass average molecular weight 10,000
- CAB-381-0.5: cellulose acetate butyrate manufactured by Eastman Corporation, glass transition point 130°C, mass average molecular weight 30,000
- CAB-321-0.1: cellulose acetate butyrate manufactured by Eastman Corporation, glass transition point 127°C, mass average molecular weight 12,000
- CAB-171-15: cellulose acetate butyrate manufactured by Eastman Corporation, glass transition point 161°C, mass average molecular weight 65,000
- CA-398-3: cellulose acetate manufactured by Eastman Corporation, glass transition point 180°C, mass average molecular weight 30,000

[Table 1]

| Table 1 | | | Production Example of coating agent | | | | | | | | | | | | | | | | | | | |
|---|---|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 | 18 | 19 |
| Inorganic particle | | Barium sulfate | 5.0 | 5.0 | 5.0 | 5.0 | 0.0 | 5.0 | 5.0 | 5.0 | 5.0 | 5.0 | 5.0 | 5.0 | 0.04 | 0.1 | 5.0 | 5.0 | 5.0 | | |
| | | Calcium carbonate | | | | | | | | | | | | | | | | | | 5.0 | |
| | | Zinc oxide | | | | | | | | | | | | | | | | | | | 5.0 |
| Dispersant | | BYK-111 | 0.1 | 0.1 | 0.1 | 0.1 | 0.0 | 0.1 | 0.1 | 0.1 | 0.1 | 0.1 | 0.1 | 0.1 | 0.1 | 0.1 | 0.1 | 0.1 | 0.1 | 0.1 | 0.1 |
| Binder resin (Resin (A)) | NC | DLX5-8 | 18.0 | | | | | | | | | | | | | | | 12.6 | 16.2 | | |
| | PA | S-2800 | | 18.0 | | | | | | | | | | | | | | 5.4 | 1.8 | | |
| | CAP | CAP-482-0.5 | | | | | | | | | | 18.0 | | | | | | | | | |
| | | CAP-504-0.2 | | | | | | | | | | | | | | | | | | | |
| | | CAP-482-20 | | | | | | | | | | | | 18.0 | | | | | | | |
| | CAB | CAB-553-0.4 | | | 18.0 | 18.0 | 18.0 | | | | | | | | 18.0 | 18.0 | 0.1 | | | 18.0 | 18.0 |
| | | CAB-531-1 | | | | | | 18.0 | | | | | | | | | | | | | |
| | | CAB-381-0.5 | | | | | | | 18.0 | | | | | | | | | | | | |
| | | CAB-321-0.1 | | | | | | | | | 18.0 | | | | | | | | | | |
| | | CAB-171-15 | | | | | | | | | | | 18.0 | | | | | | | | |
| | CA | CA-398-3 | | | | | | | | 18.0 | | | | | | | | | | | |
| Adhesion promoter | | Superchlon 370M | 0.7 | 0.7 | 0.7 | 0.0 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 |
| Solvent | | Ethyl acetate | 8.0 | 8.0 | 8.0 | 8.0 | 8.0 | 8.0 | 8.0 | 10.0 | 8.0 | 8.0 | 8.0 | 64.0 | 8.0 | 8.0 | 8.0 | 8.0 | 8.0 | 8.0 | 8.0 |
| | | 2-Propanol | 1.0 | 1.0 | 1.0 | 1.0 | 1.0 | 1.0 | 1.0 | 1.0 | 1.0 | 1.0 | 1.0 | 8.0 | 1.0 | 1.0 | 1.0 | 1.0 | 1.0 | 1.0 | 1.0 |
| | | Propylene glycol monomethyl ether | 1.0 | 1.0 | 1.0 | 1.0 | 1.0 | 1.0 | 1.0 | 1.0 | 1.0 | 1.0 | 1.0 | 8.0 | 1.0 | 1.0 | 1.0 | 1.0 | 1.0 | 1.0 | 1.0 |
| Properties | | Resin Mw | 13000 | 25000 | 20000 | 20000 | 20000 | 40000 | 30000 | 30000 | 12000 | 15000 | 65000 | 75000 | 20000 | 20000 | 20000 | 10000 | 12000 | 20000 | 20000 |
| | | Solid content (mass%) in coating agent | 32.1% | 32.1% | 32.1% | 31.7% | 20.0% | 32.1% | 32.1% | 30.3% | 32.1% | 32.1% | 32.1% | 10.4% | 20.4% | 20.6% | 34.4% | 32.1% | 32.1% | 32.1% | 32.1% |
| | | Ratio (mass%) of inorganic particle to resin (A) | 48.1% | 48.1% | 48.1% | 48.1% | 0.0% | 48.1% | 48.1% | 48.1% | 48.1% | 48.1% | 48.1% | 48.1% | 0.7% | 1.8% | 99.4% | 48.1% | 48.1% | 48.1% | 48.1% |
| | | Cellulose-based resin content (mass%) in resin (A) | 100 | 100 | 100 | 100 | 100 | 100 | 100 | 100 | 100 | 100 | 100 | 100 | 100 | 100 | 100 | 70 | 90 | 100 | 100 |

[Production Example 20] Coating agent 20

Takelac W-5030 (polyurethane resin manufactured by Mitsui Chemicals, Inc.) and Takenate WD-725 (manufactured by Mitsui Chemicals, Inc.), which served as a curing agent, were mixed at a solid content ratio of 9:1, and diluted with a solvent (water/2-propanol = 9/1) such that the solid content became 5 mass% to prepare a coating agent 20.
The glass transition point of the resin in the coating agent was 85°C, and the mass average molecular weight could not be measured.

[Production Example 21] Coating agent 21

Vyromax HR-15ET (polyamideimide resin manufactured by Toyobo Co., Ltd.) was diluted with a solvent (ethanol/toluene = 1/1) such that the solid content became 5 mass% to prepare a coating agent 21. The glass transition point of the resin in the coating agent was 260°C, and the mass average molecular weight was 6,000.

[Production Example 22] Coating agent 22

jER1004 (epoxy resin manufactured by Mitsubishi Chemical Corporation) and Coronate L (manufactured by Tosoh Corporation), which served as a curing agent, were mixed at a solid content ratio of 9:1, and diluted with a solvent (ethanol/toluene = 1/1) such that the solid content became 5 mass% to prepare a coating agent 22. The glass transition point of the resin in the coating agent was 104°C.

[Production Example 23] Coating agent 23

20 parts of polyamide resin solution S-2800 (solid content 30%), 20 parts of cellulose resin solution DLX5-8 (solid content 30%), 30 parts of inorganic pigment CR-80 (solid content 100%, manufactured by Ishihara Sangyo Kaisha, Ltd., rutile crystal structure, surface treated with silica and alumina, average particle diameter 0.25 $\mu$m, oil absorption 20 ml/100 g), 0.8 parts of hydrocarbon wax (solid content 100%, penetration 13, melting point 110°C), 20.4 parts of propyl acetate, and 8.8 parts of 2-propanol were mixed. The obtained mixture was kneaded and dispersed in a sand mill for 20 minutes to obtain a coating agent 23.

[Production Example 24] Coating agent 24

5.0 parts of calcium carbonate (average particle diameter: 0.08 $\mu$m, solid content 100%, oil absorption 54 ml/100 g, refractive index 1.6), 0.1 parts of DA-375 (manufactured by BYK Chemie, resin having acidic functional groups, solid content 95%), 8.0 parts of ethyl acetate, 1.0 part of 2-propanol, and 1.0 part of propylene glycol monomethyl ether were stirred and mixed. After the obtained mixture was subjected to a dispersion treatment with a bead mill (using zirconia beads), 12.0 parts of CAP-504-0.2 and 1.2 parts of VINNOL E 15/40A were added, stirred, and mixed to obtain a coating agent 24.

[Production Examples 25 to 41] Coating agents 25 to 41

Coating agents 25 to 41 were obtained according to the same method as Production Example 24, except that the raw materials and blending ratios described in Table 2 were used.
Cellulose acetate propionate (CAP) and cellulose acetate butyrate (CAB) were each used as a resin solution adjusted to a solid content of 30% using a mixed solvent of ethyl acetate/2-propanol/propylene glycol monomethyl ether = 8/1/1.
Details of the raw materials described in Table 2 used in Production Examples 25 to 41 are shown below. Raw materials not described below are as described in Production Example 24.

(Inorganic Particle)

- Calcium carbonate: average particle diameter: 0.08 $\mu$m, solid content 100%, oil absorption 54 ml/100 g, refractive index 1.9 to 2.0

(Dispersant)

- BYK-W9011: manufactured by BYK Chemie, dispersant having acidic functional groups, solid content 95%
- DA-375: manufactured by Kusumoto Chemicals, Ltd., polyether phosphate ester, solid content 100%

(Binder Resin A)

- NC: nitrocellulose resin solution DLX5-8 (manufactured by ICI Novel enterprises, nitrocellulose, nitrogen content 12.0%, solid content 30%, 2-propanol solution, glass transition point 130°C)
- CAB-553-0.4: manufactured by Eastman Corporation, cellulose acetate butyrate, glass transition point 136°C, mass average molecular weight 20,000
- CAP: CAP-504-0.2 (manufactured by Eastman Corporation, cellulose acetate propionate, glass transition point 159°C, mass average molecular weight 15,000)

(Binder Resin B)

- PVC/CA: VINNOL E 15/40A (manufactured by WACKER, vinyl chloride vinyl acetate copolymer, K value 39, glass transition point 69°C)
- PVB: S-LEC BL-1 (manufactured by Sekisui Chemical Co., Ltd., polyvinyl butyral resin, glass transition point 70°C, mass average molecular weight 19,000)
- Polyurethane resin A: resin prepared in Synthesis Example 1 of polyurethane resin A. Glass transition point -42°C, mass average molecular weight 70,000
- Polyurethane resin B: resin prepared in Synthesis Example 2 of polyurethane resin B. Glass transition point 40°C, mass average molecular weight 60,000
- Polyurethane resin C: resin prepared in Synthesis Example 3 of polyurethane resin C. Glass transition point 0°C, mass average molecular weight 59,000
- S-2800: polyamide resin manufactured by Kao Corporation, glass transition point 115°C, mass average molecular weight 3,500 (solid content 30%, 2-propanol/toluene = 30/70 solution, softening point 115°C)

Cellulose acetate propionate (CAP), vinyl chloride/vinyl acetate resin (PVC/VA), polyvinyl butyral (PVB), and polyurethane (PU) were each used as a resin solution with a solid content adjusted to 30% using a mixed solvent of ethyl acetate/2-propanol/propylene glycol monomethyl ether = 8/1/1.

Table 2 — Production Example of coating agent

| Table 2 | | | | Tg (°C) | Softening point (°C) | Molecular weight Mw | 24 | 25 | 26 | 27 | 28 | 29 | 30 | 31 | 32 | 33 | 34 | 35 | 36 | 37 | 38 | 39 | 40 | 41 |
|---|---|---|---|---|---|---|---|---|---|---|---|---|---|---|---|---|---|---|---|---|---|---|---|---|
| Inorganic particle | | Barium sulfate | | - | - | - | | | | | | | | | | | | | | | 5.0 | 5.0 | 5.0 | |
| | | Calcium carbonate | | - | - | - | 5.0 | 5.0 | 5.0 | 5.0 | 5.0 | 5.0 | 5.0 | 5.0 | 5.0 | 5.0 | 5.0 | 5.0 | 5.0 | 5.0 | | | | 5.0 |
| Dispersant | | BYK-W9011 | | - | - | - | | | | | | | | | | | | | 0.1 | | | | | |
| | | DA-375 | | - | - | - | 0.1 | 0.1 | 0.1 | 0.1 | 0.1 | 0.1 | 0.1 | 0.1 | 0.1 | 0.1 | 0.1 | 0.1 | | | | | | 0.1 |
| | | BYK-111 | | - | - | - | | | | | | | | | | | | | | 0.1 | 0.1 | 0.1 | 0.1 | |
| Binder resin | Resin (A) | NC | DLX5-8 | 130 | - | 13000 | | | | | | | | | | | 12.0 | 12.0 | | | 10.8 | 11.7 | | |
| | | CAB | CAB-553-0.4 | 136 | - | 20000 | | | | | | | | | | | | | | | | | 4.0 | |
| | | CAP | CAP-504-0.2 | 159 | - | 15000 | 12.0 | 12.0 | 12.0 | 12.0 | 12.0 | 12.0 | 12.0 | 12.0 | 12.0 | 12.0 | | | 12.0 | 12.0 | | | | 12.0 |
| | | PA | S-2800 | - | 115 | 3500 | | | | | | | | | 1.2 | 2.4 | | | | | 7.2 | 6.3 | | |
| | Resin (B) | PVC/VA | VINNOL E 15/40A | 69 | - | 45000 | 1.2 | 2.4 | | | | | | | | | | | 1.2 | 1.2 | | | | |
| | | PVB | S-LEC BL-1 | 60 | - | 19000 | | | 1.2 | 2.4 | | | | | | | | | | | | | | |
| | | PU | Urethane resin A | -40 | - | 70000 | | | | | 1.2 | 2.4 | | | | | | | | | | | | |
| | | | Urethane resin B | 40 | - | 60000 | | | | | | | 1.2 | 2.4 | | | 1.2 | 2.4 | | | | | | |
| | | | Urethane resin C | 0 | - | 59000 | | | | | | | | | | | | | | | | | | 1.2 |
| Solvent | | Ethyl acetate | | - | - | | 8.0 | 8.0 | 8.0 | 8.0 | 8.0 | 8.0 | 8.0 | 8.0 | 8.0 | 8.0 | 8.0 | 8.0 | 8.0 | 8.0 | 8.0 | 8.0 | 8.0 | 8.0 |
| | | 2-Propanol | | - | - | | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Propylene glycol monomethyl ether | | - | - | | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Properties | | Weighted average (°C) of glass transition point of binder resin | | | | | 150.8 | 144.0 | 150.9 | 144.2 | 140.9 | 125.8 | 148.2 | 139.2 | 155.0 | 151.7 | 121.8 | 115.0 | 150.8 | 150.8 | 124.0 | 124.8 | 136.0 | 144.5 |
| | | Weighted average (Mw) of weight average molecular weight of binder resin | | | | | 18000 | 20000 | 15000 | 16000 | 20000 | 24000 | 19000 | 23000 | 14000 | 13000 | 17000 | 21000 | 18000 | 18000 | 9000 | 10000 | 20000 | 19000 |
| | | Solid content (mass%) in coating agent | | | | | 32.0% | 31.9% | 32.0% | 31.9% | 32.0% | 31.9% | 32.0% | 31.9% | 32.0% | 31.9% | 32.0% | 31.9% | 32.0% | 32.0% | 31.7% | 31.7% | 33.0% | 32.0% |
| | | Inorganic particle content (mass%) in solid content | | | | | 55.2% | 53.1% | 55.2% | 53.1% | 55.2% | 53.1% | 55.2% | 53.1% | 55.2% | 53.1% | 55.2% | 53.1% | 55.2% | 55.2% | 47.6% | 47.6% | 79.4% | 55.2% |
| | | Ratio (mass%) of inorganic particle to resin | | | | | 55.8% | 53.6% | 55.8% | 53.6% | 55.8% | 53.6% | 55.8% | 53.6% | 55.8% | 53.6% | 55.8% | 53.6% | 55.8% | 55.8% | 48.1% | 48.1% | 80.6% | 55.8% |
| | | Cellulose-based resin content (mass%) in resin | | | | | 90.9% | 83.3% | 90.9% | 83.3% | 90.9% | 83.3% | 90.9% | 83.3% | 90.9% | 83.3% | 90.9% | 83.3% | 90.9% | 90.9% | 60.0% | 65.0% | 100.0% | 90.9% |
| | | Content (mass%) of nitrocellulose in solid content | | | | | 0.0% | 0.0% | 0.0% | 0.0% | 0.0% | 0.0% | 0.0% | 0.0% | 0.0% | 0.0% | 39.7% | 38.2% | 0.0% | 0.0% | 30.9% | 33.4% | 0.0% | 0.0% |
| | | Chlorine atomic mass (mmol/g) in solid content | | | | | 0.50 | 0.97 | 0.00 | 0.00 | 0.00 | 0.00 | 0.00 | 0.00 | 0.00 | 0.00 | 0.00 | 0.00 | 0.50 | 0.50 | 0.00 | 0.00 | 0.00 | 0.00 |
| | | HSP difference of resin | | | | | 18.4 | 18.4 | 19.9 | 19.9 | 18.5 | 18.5 | 18.9 | 18.9 | 19.5 | 19.5 | 8.8 | 8.8 | 18.4 | 18.4 | 16.3 | 16.3 | - | 18.8 |

[Table 2]

EP 4 755 630 A1

22

<Production of Laminate>

[Example 1]

The coating agent 1 was diluted with a mixed solvent (isopropyl alcohol/ethyl acetate) to a solid content of 15%. As the base material 1, a uniaxially oriented polyethylene film MDOPE corona-treated on both surfaces (surface oxygen elemental ratio 10.2%, thickness 25 $\mu$m) was prepared. The diluted coating agent 1 was printed on the corona-treated surface of the base material 1 to form a coating layer. The printing of the coating agent 1 was performed using a gravure printing machine equipped with a gravure plate having a plate depth of 60 $\mu$m, under conditions of a printing speed of 50 m/min and an inline oven at 60°C.

Next, on the corona-treated surface of the base material 1 opposite to the surface on which the coating layer was formed, a polyether-based reactive urethane adhesive ("TM-340V/CAT-29B" manufactured by Toyo-Morton Ltd.) was coated using a dry laminating machine equipped with a gravure plate having a plate depth of 40 $\mu$m to form an adhesive layer. Thereafter, a low-density polyethylene (LLDPE) film (thickness 60 $\mu$m) was bonded as the base material 2 onto the adhesive layer to produce a lamination film.

The lamination film produced as described above was stored at 40°C for 1 day to obtain a laminate having the configuration (1) (coating layer/base material 1/adhesive layer/base material 2). The obtained laminate had a thermal shrinkage rate of 0.1% or less and a peak temperature difference of loss tangent of 1.5°C.

[Examples 2 to 5, 7 to 20, and 23 to 29, and Comparative Examples 1 to 3 and 5]

Laminates were obtained according to the same method as Example 1, except that the configuration, the coating agent, and the printing conditions of the coating agent were changed to those described in Table 3. In Example 3, a high-density polyethylene (HDPE) film (thickness 25 $\mu$m) was used as the base material 1. In Example 5, a biaxially oriented polypropylene (OPP) film (thickness 25 $\mu$m) was used as the base material 1, and a cast polypropylene (CPP) film was used as the base material 2. Comparative Examples 1 to 3 and 5 was fused and broken during shrinkage rate measurement, and the shrinkage rate could not be measured.

[Example 6]

The diluted coating agent 3 was printed on the corona-treated surface of a uniaxially oriented polyethylene (MDOPE) film corona-treated on both surfaces (thickness 25 $\mu$m) as the base material 1, using a gravure printing machine equipped with a gravure plate having a plate depth of 60 $\mu$m, under conditions of a printing speed of 50 m/min and an inline oven at 60°C to form a coating layer and obtain a laminate having the configuration (4) (coating layer/base material 1).

The obtained laminate had a thermal shrinkage rate of 0.1% or less and a peak temperature difference of loss tangent of 1.5°C.

[Example 21]

The diluted coating agent 3 was printed on the corona-treated surface of a uniaxially oriented polyethylene (MDOPE) film corona-treated on both surfaces (thickness 25 $\mu$m) as the base material 1, using a gravure printing machine equipped with a gravure plate having a plate depth of 60 $\mu$m, under conditions of a printing speed of 50 m/min and an inline oven at 60°C to form a coating layer.

Next, a polyether-based reactive urethane adhesive ("TM-340V/CAT-29B" manufactured by Toyo-Morton Ltd.) was coated on the coating layer of the base material 1 using a dry laminating machine equipped with a gravure plate having a plate depth of 40 $\mu$m to form an adhesive layer, and a low-density polyethylene (LLDPE) film (thickness 60 $\mu$m) was bonded as the base material 2 onto the adhesive layer to produce a lamination film.

The lamination film produced as described above was stored at 40°C for 1 day to obtain a laminate having the configuration (2) (base material 1/coating layer/adhesive layer/base material 2). The obtained laminate had a thermal shrinkage rate of 10.9% and a peak temperature difference of loss tangent of 1.0°C.

[Example 22]

The diluted coating agent 3 was printed on the corona-treated surface of a low-density polyethylene (LLDPE) film corona-treated on one surface (thickness 60 $\mu$m) as the base material 2 to form a coating layer. The printing was performed using a gravure printing machine equipped with a gravure plate having a plate depth of 60 $\mu$m, under conditions of a printing speed of 50 m/min and an inline oven at 60°C.

Next, a polyether-based reactive urethane adhesive ("TM-340V/CAT-29B" manufactured by Toyo-Morton Ltd.)

was coated on the coating layer of the base material 2 using a dry laminating machine equipped with a gravure plate having a plate depth of 40 $\mu$m to form an adhesive layer. Then, a uniaxially oriented polyethylene (MDOPE) film (thickness 25 $\mu$m) was bonded as the base material 1 onto the adhesive layer to produce a lamination film.

The lamination film produced as described above was stored at 40°C for 1 day to obtain a laminate having the configuration (3) (base material 1/adhesive layer/coating layer/base material 2). The obtained laminate had a thermal shrinkage rate of 12.3% and a peak temperature difference of loss tangent of 1.0°C.

[Comparative Example 4]

A polyether-based reactive urethane adhesive ("TM-340V/CAT-29B" manufactured by Toyo-Morton Ltd.) was coated on the corona-treated surface of a uniaxially oriented polyethylene (MDOPE) film (thickness 25 $\mu$m) as the base material 1 using a dry laminating machine equipped with a gravure plate having a plate depth of 40 $\mu$m to form an adhesive layer. Next, a low-density polyethylene (LLDPE) film (thickness 60 $\mu$m) was bonded as the base material 2 onto the adhesive layer to produce a lamination film.

The lamination film produced as described above was stored at 40°C for 1 day to obtain a laminate having a configuration of base material 1/adhesive layer/base material 2. The obtained laminate was fused and broken due to heating and pressurizing, and the thermal shrinkage rate could not be measured.

[Example 30]

The coating agent 24 was diluted with a mixed solvent (isopropyl alcohol/ethyl acetate) to a solid content of 15%. As the base material 1, a uniaxially oriented polyethylene film MDOPE2 corona-treated on both surfaces (surface oxygen elemental ratio 4.0%, thickness 25 $\mu$m) was prepared. The diluted coating agent 24 was printed on the corona-treated surface of the base material 1 to form a coating layer. The printing was performed using a gravure printing machine equipped with a gravure plate having a plate depth of 60 $\mu$m, under conditions of a printing speed of 50 m/min and an inline oven at 60°C.

Next, a polyether-based reactive urethane adhesive ("TM-340V/CAT-29B" manufactured by Toyo-Morton Ltd.) was coated on the corona-treated surface of the base material 1 opposite to the surface on which the coating layer was formed, using a dry laminating machine equipped with a gravure plate having a plate depth of 40 $\mu$m to form an adhesive layer. Then, a low-density polyethylene (LLDPE) film (thickness 60 $\mu$m) was bonded as the base material 2 onto the adhesive layer to produce a lamination film.

The lamination film produced as described above was stored at 40°C for 1 day to obtain a laminate having the configuration (1) (coating layer/base material 1/adhesive layer/base material 2). The obtained laminate had a thermal shrinkage rate of 0.1% or less, and a peak temperature difference of loss tangent of 1.5°C.

[Examples 31 to 65]

Laminates were obtained according to the same method as Example 30, except that the configuration, the coating agent, and the printing conditions of the coating agent were changed to those described in Table 4. Details of the base materials are as follows.

MDOPE: (surface oxygen elemental ratio 10.2%, thickness 25 $\mu$m, stretch ratio 8 times)
MDOPE2: (surface oxygen elemental ratio 4.0%, thickness 25 $\mu$m, stretch ratio 8 times)
MDOPE3: (surface oxygen elemental ratio 10.2%, thickness 25 $\mu$m, stretch ratio 5 times)
MDOPE4: (surface oxygen elemental ratio 10.2%, thickness 25 $\mu$m, stretch ratio 10 times)

<Evaluation of Laminate>

For the laminates produced in Examples and Comparative Examples, heat resistance, bag forming suitability, and adhesion were evaluated as described below. The results are shown in Tables 3 and 4.

[Heat Resistance]

The laminate was cut to 50 mm × 25 mm (in the case where a uniaxially oriented film was included in the base material, the stretching direction (MD direction) was set as the long side 50 mm). The cut test piece was subjected to heating and pressurizing using a heat sealing tester. FIG. 1 and FIG. 2 are plan views illustrating the measurement method of the shrinkage rate of a laminate during heating and pressurizing. As shown in FIG. 1, in the laminate cut to 50 mm × 25 mm, heating and pressurizing were performed in a range of 20 mm × 10 mm. An area (S1) before heating and pressurizing matched a range (A) subjected to heating and pressurizing. In contrast, FIG. 2 shows an area (S2) after heating and pressurizing, and an end portion (the 25 mm side of the heated and pressurized portion) D1 before heating and pressurizing became an end portion D2 due to thermal shrinkage.

The heating and pressurizing conditions are as follows. Next, the appearance change of the laminate was evaluated according to the following evaluation criteria.

<Heating and Pressurizing Conditions>

Heating temperature: 160°C, pressurization: 2 kg/cm$^2$, heating and pressurizing time: 1 second,

Heating and pressurizing direction: Heating and pressurizing were performed from the coating layer side of the laminate. For Examples 21 and 22 in which the coating layer was not on the outermost layer, heating and pressurizing were performed from the base material 1 side.

(Evaluation Criteria)

S: No significant wrinkles occur in the heated and pressurized portion. (Very good)
A: Wrinkles occur in the heated and pressurized portion, but there are no portions where the film is fused and broken. (Good)
B: Wrinkles occur in the heated and pressurized portion, and there are portions where the film is partially fused and broken. (Usable)
C: The heated and pressurized portion is completely fused and broken, resulting in separation. (Unusable)

[Bag Forming Suitability]

A laminate having a length of 30 m and a width of 12.5 cm was marked every 1 m, and heating and pressurizing was performed 30 times per 1 m length under the following conditions using an automatic three-side sealing bag forming machine. Next, the shrinkage rate in the length direction of the laminate was evaluated according to the following evaluation criteria.

<Heating and Pressurizing Conditions>

Heating temperature: 145°C, pressurization: 2 kg/cm$^2$, heating and pressurizing time: 1 second.

Heating and pressurizing direction: Heating and pressurizing was performed from the coating layer side of the laminate. For Examples 21 and 22 in which the coating layer was not on the outermost layer, heating and pressurizing was performed from the base material 1 side.

(Evaluation Criteria)

S: The shrinkage rate in the length direction is less than 2.5%. (Very good)
A: The shrinkage rate in the length direction is 2.5% or more and less than 5%. (Good)
B: The shrinkage rate in the length direction is 5% or more and less than 10%. (Usable)
C: The shrinkage rate in the length direction is 10% or more, or the film was fused and broken. (Unusable)

[Adhesion]

Based on JIS K5600-5-6, an adhesion test according to the cross-cut method was performed on the laminate. Subsequently, the adhesion was evaluated according to the following evaluation criteria.

(Evaluation Criteria)

S: The result of the adhesion test is classification 0 to 1. That is, the peeling area is less than 5%.
A: The result of the adhesion test is classification 2. That is, the peeling area is 5% or more and less than 15%.

B: The result of the adhesion test is classification 3. That is, the peeling area is 15% or more and less than 35%.
C: The result of the adhesion test is classification 4 to 5. That is, the peeling area is 35% or more.

The following evaluations were performed on the laminates produced in Examples 30 to 65. The results are shown in Table 4.

[Coloring Property after Heating]

The base material 2 side of the obtained laminate was attached to a metal plate and heated at 200°C for 15 minutes, and a color change ∆E of the laminate before and after heating was evaluated. The color change ∆E was calculated using the following formula by measuring color values L*x, a*x, and b*x from the base material 1 side of the laminate using a spectrophotometer (X-Rite eXact, manufactured by X-Rite).

(Formula 4)

$$\Delta E = ((L*x - L*y)^2 + (a*x - a*y)^2 + (b*x - b*y)^2)^{1/2}$$

(Evaluation Criteria)

S: The color change ∆E before and after heating is less than 10.
A: The color change ∆E before and after heating is 10 or more and less than 20.
B: The color change ∆E before and after heating is 20 or more and less than 30.
C: The color change ∆E before and after heating is 30 or more.

[HSP Difference in Two Resins]
The Hansen solubility parameter (HSP) is an index indicating the solubility of a substance, and is expressed by a dispersion term δd, a polar term δp, and a hydrogen bonding term δh. The HSP difference (Ra) between two substances is expressed as Ra = {4×∆δd²+∆δp²+∆δh²}^{1/2} based on the dispersion term difference ∆δd, the polar term difference ∆δp, and the hydrogen bonding term difference ∆δh between the two substances. The smaller Ra is, the higher the compatibility is, and the larger Ra is, the lower the compatibility is. For the Hansen solubility parameter, values described in Hansen Solubility Parameters; A Users Handbook, written by Charles M. Hansen (CRC Press, 2007) were referred to. In addition, for substances with values unknown in the literature and the like, values calculated using solubility tests of the substance in multiple solvents and conventional computer software such as Hansen Solubility Parameters in Practice (HSPiP) were referred to.

[HSP Difference Between Resin (B) and Base Material 1]

Regarding the HSP difference between the resin (B) and the base material 1, the following was used as the HSP value of the base material 1.

- Polyethylene base material (MDOPE, MDOPE2, MDOPE3, MDOPE4, LLDPE)
  δd: 16.9, δp: 0.8, δh: 2.8
- Polypropylene base material (OPP)
  δd: 18.0, δp: 0, δh: 1.0

[Table 3]

| Table 3 | | Example 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| Coating layer | Coating agent | 1 | 2 | 3 | 3 | 3 | 3 | 3 | 4 | 5 | 6 | 7 | 8 | 9 | 10 | 11 |
| | Solid content (%) of coating agent | 15 | 15 | 15 | 15 | 15 | 15 | 15 | 15 | 15 | 15 | 15 | 15 | 15 | 15 | 10 |
| | Plate depth (μm) | 60 | 60 | 60 | 60 | 60 | 60 | 60 | 60 | 60 | 60 | 60 | 60 | 60 | 60 | 60 |
| | Number of times to print over | 1 | 1 | 1 | 1 | 1 | 1 | 1 | 1 | 1 | 1 | 1 | 1 | 1 | 1 | 1 |
| | Film thickness (μm) | 1.0 | 1.0 | 1.0 | 1.0 | 1.0 | 1.0 | 1.0 | 1.0 | 1.0 | 1.0 | 1.0 | 1.0 | 1.0 | 1.0 | 0.6 |
| Base material 1 | Base material | MDOPE | MDOPE | HDPE | MDOPE | OPP | MDOPE | MDOPE | MDOPE | MDOPE | MDOPE | MDOPE | MDOPE | MDOPE | MDOPE | MDOPE |
| | Film thickness (μm) | 25 | 25 | 25 | 25 | 25 | 50 | 25 | 25 | 25 | 25 | 25 | 25 | 25 | 25 | 25 |
| Adhesive layer | Film thickness (μm) | 2.5 | 2.5 | 2.5 | 2.5 | 2.5 | - | 2.5 | 2.5 | 2.5 | 2.5 | 2.5 | 2.5 | 2.5 | 2.5 | 2.5 |
| Base material 2 | Base material | LLDPE | LLDPE | LLDPE | LLDPE | CPP | - | LLDPE | LLDPE | LLDPE | LLDPE | LLDPE | LLDPE | LLDPE | LLDPE | LLDPE |
| | Film thickness (μm) | 60 | 60 | 60 | 60 | 60 | - | 60 | 60 | 60 | 60 | 60 | 60 | 60 | 60 | 60 |
| Lamination configuration | | (1) | (1) | (1) | (1) | (1) | (4) | (1) | ( ) | (1) | (1) | (1) | (1) | (1) | (1) | (1) |
| Inorganic particle content (mass%) in solid content | | 46.1 | 46.1 | 46.1 | 46.1 | 46.1 | 46.1 | 46.1 | 47.6 | 0 | 46.1 | 46.1 | 46.1 | 46.1 | 46.1 | 46.1 |
| Ratio (mass%) of inorganic particle to resin (A) | | 48.1 | 48.1 | 48.1 | 48.1 | 48.1 | 48.1 | 48.1 | 48.1 | 0 | 48.1 | 48.1 | 48.1 | 48.1 | 48.1 | 48.1 |
| Thermal shrinkage rate (%) | | ≤0.1 | ≤0.1 | ≤0.1 | ≤0.1 | ≤0.1 | ≤0.1 | ≤0.1 | ≤0.1 | ≤0.1 | 10.4 | ≤0.1 | ≤0.1 | 6.2 | ≤0.1 | ≤0.1 |
| tanδ peak temperature difference (°C) | | 1.5 | 1.5 | 1.5 | 1.5 | 1.5 | 1.5 | 1.5 | 1.5 | 1.5 | 0.5 | 1.5 | 1.5 | 1.0 | 1.5 | 1.5 |

(continued)

Table 3

| | | Example | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Evaluation | Heat resistance | S | S | S | S | S | S | S | S | A | B | S | S | A | S | S |
| | Bag forming suitability | S | S | S | S | S | S | S | S | A | B | S | S | A | S | S |
| | Adhesion | S | S | S | S | S | S | S | B | S | S | S | S | S | S | S |

[Table 3-1]

Table 3 (continued 1)

| | | Example | | | | | | | | | | | | |
|---|---|---|---|---|---|---|---|---|---|---|---|---|---|---|
| | | 16 | 17 | 18 | 19 | 20 | 21 | 22 | 23 | 24 | 25 | 26 | 27 | 28 | 29 |
| Coating layer | Coating agent | 12 | 3 | 3 | 3 | 3 | 3 | 3 | 13 | 14 | 15 | 16 | 17 | 18 | 19 |
| | Solid content (%) of coating agent | 5 | 15 | 15 | 15 | 15 | 15 | 15 | 15 | 15 | 15 | 15 | 15 | 15 | 15 |
| | Plate depth (μm) | 60 | 15 | 30 | 60 | 60 | 60 | 60 | 60 | 60 | 60 | 60 | 60 | 60 | 60 |
| | Number of times to print over | 1 | 1 | 1 | 4 | 6 | 1 | 1 | 1 | 1 | 1 | 1 | 1 | 1 | 1 |
| | Film thickness (μm) | 0.2 | 0.2 | 0.5 | 4.0 | 6.0 | 1.0 | 1.0 | 1.0 | 1.0 | 1.0 | 1.0 | 1.0 | 1.0 | 1.0 |
| Base material 1 | Base material | MDOPE | MDOPE | MDOPE | MDOPE | MDOPE | MDOPE | MDOPE | MDOPE | MDOPE | MDOPE | MDOPE | MDOPE | MDOPE | MDOPE |
| | Film thickness (μm) | 25 | 25 | 25 | 25 | 25 | 25 | 25 | 25 | 25 | 25 | 25 | 25 | 25 | 25 |
| Adhesive layer | Film thickness (μm) | 2.5 | 2.5 | 2.5 | 2.5 | 2.5 | 2.5 | 2.5 | 2.5 | 2.5 | 2.5 | 2.5 | 2.5 | 2.5 | 2.5 |
| Base material 2 | Base material | LLDPE | LLDPE | LLDPE | LLDPE | LLDPE | LLDPE | LLDPE | LLDPE | LLDPE | LLDPE | LLDPE | LLDPE | LLDPE | LLDPE |
| | Film thickness (μm) | 60 | 60 | 60 | 60 | 60 | 60 | 60 | 60 | 60 | 60 | 60 | 60 | 60 | 60 |
| Lamination configuration | | (1) | (1) | (1) | (1) | (1) | (2) | (3) | (1) | (1) | (1) | (1) | (1) | (1) | (1) |
| Inorganic particle content (mass%) in solid content | | 46.1 | 46.1 | 46.1 | 46.1 | 46.1 | 46.1 | 46.1 | 0.7 | 1.7 | 91.3 | 46.1 | 46.1 | 46.1 | 46.1 |
| Ratio (mass%) of inorganic particle to resin (A) | | 48.1 | 48.1 | 48.1 | 48.1 | 48.1 | 48.1 | 48.1 | 0.7 | 1.8 | 99.4 | 48.1 | 48.1 | 48.1 | 48.1 |
| Thermal shrinkage rate (%) | | 4.2 | 4.8 | ≤0.1 | ≤0.1 | ≤0.1 | 10.9 | 12.3 | ≤0.1 | ≤0.1 | ≤0.1 | 22.8 | 9.4 | ≤0.1 | ≤0.1 |

29

| Table 3 (continued 1) | | Example | | | | | | | | | | | | | |
|---|---|---|---|---|---|---|---|---|---|---|---|---|---|---|---|
| | | 16 | 17 | 18 | 19 | 20 | 21 | 22 | 23 | 24 | 25 | 26 | 27 | 28 | 29 |
| tanδ peak temperature difference (°C) | | 1.0 | 1.0 | 1.5 | 1.5 | 1.5 | 1.0 | 1.0 | 1.5 | 1.5 | 1.5 | 1.0 | 1.5 | 1.5 | 1.5 |
| Evaluation | Heat resistance | S | S | S | S | A | B | B | A | S | S | B | S | S | S |
| | Bag form-ing suit-ability | B | B | S | S | A | B | B | A | S | S | B | S | S | S |
| | Adhesion | S | S | S | S | S | S | S | S | S | B | S | S | S | S |

EP 4 755 630 A1

30

[Table 3-2]

| Table 3 (continued 2) | | Comparative Example | | | | |
|---|---|---|---|---|---|---|
| | | 1 | 2 | 3 | 4 | 5 |
| Coating layer | Coating agent | 20 | 21 | 22 | - | 23 |
| | Solid content (%) of coating agent | 15 | 15 | 15 | - | 15 |
| | Plate depth ($\mu$m) | 60 | 60 | 60 | - | 60 |
| | Number of times to print over | 1 | 1 | 1 | - | 1 |
| | Film thickness ($\mu$m) | 1.0 | 1.0 | 1.0 | - | 1.0 |
| Base material 1 | Base material | MDOPE | MDOPE | MDOPE | MDOPE | MDOPE |
| | Film thickness ($\mu$m) | 25 | 25 | 25 | 25 | 25 |
| Adhesive layer | Film thickness ($\mu$m) | 2.5 | 2.5 | 2.5 | 2.5 | 2.5 |
| Base material 2 | Base material | LLDPE | LLDPE | LLDPE | LLDPE | LLDPE |
| | Film thickness ($\mu$m) | 60 | 60 | 60 | 60 | 60 |
| Lamination configuration | | (1) | (1) | (1) | (1) | (1) |
| Inorganic particle content (mass%) in solid content | | 0 | 0 | 0 | - | 0 |
| Ratio (mass%) of inorganic particle to resin (A) | | 0 | 0 | 0 | - | 0 |
| Thermal shrinkage rate (%) | | Fused and broken | 35.7 | Fused and broken | Fused and broken | Fused and broken |
| tan$\delta$ peak temperature difference (°C) | | 0.5 | 0.5 | 0.5 | - | 0.5 |
| Evaluation | Heat resistance | C | B | C | C | C |
| | Bag forming suitability | C | C | C | C | C |
| | Adhesion | S | C | S | - | S |

As shown in Table 3, Comparative Examples 1, 3, and 5 were laminates that did not satisfy the requirement of a shrinkage rate of 30 area% or less, and was fused and broken during pressurization, resulting in poor heat resistance and bag forming suitability. Comparative Example 2 was a laminate with a shrinkage rate exceeding 30 area%, and had poor bag forming suitability and adhesion. Comparative Example 4 was a laminate without a coating layer, and had poor heat resistance and bag forming suitability.

In contrast, Examples were laminates having a coating layer containing a resin with a Tg of 115°C or higher and having a shrinkage rate of 30 area% or less during heating and pressurizing, and had good heat resistance, bag forming suitability, and adhesion.

[Table 4]

| Table 4 | | Example | | | | | | | | | | | |
|---|---|---|---|---|---|---|---|---|---|---|---|---|---|
| | | 30 | 31 | 32 | 33 | 34 | 35 | 36 | 37 | 38 | 39 | 40 | 41 |
| Coating layer | Coating agent | 24 | 25 | 26 | 27 | 28 | 29 | 30 | 31 | 32 | 33 | 34 | 35 |
| | Solid content (%) of coating agent | 15 | 15 | 15 | 15 | 15 | 15 | 15 | 15 | 15 | 15 | 15 | 15 |
| | Plate depth ($\mu$m) | 60 | 60 | 60 | 60 | 60 | 60 | 60 | 60 | 60 | 60 | 60 | 60 |
| | Number of times to print over | 1 | 1 | 1 | 1 | 1 | 1 | 1 | 1 | 1 | 1 | 1 | 1 |
| | Film thickness ($\mu$m) | 1.0 | 1.0 | 1.0 | 1.0 | 1.0 | 1.0 | 1.0 | 1.0 | 1.0 | 1.0 | 1.0 | 1.0 |
| Base material 1 | Base material | MDOPE | MDOPE | MDOPE | MDOPE | MDOPE | MDOPE | MDOPE | MDOPE | MDOPE | MDOPE | MDOPE | MDOPE |
| | Film thickness ($\mu$m) | 25 | 25 | 25 | 25 | 25 | 25 | 25 | 25 | 25 | 25 | 25 | 25 |
| Adhesive layer | Film thickness ($\mu$m) | 2.5 | 2.5 | 2.5 | 2.5 | 2.5 | 2.5 | 2.5 | 2.5 | 2.5 | 2.5 | 2.5 | 2.5 |
| Base material 2 | Base material | LLDPE | LLDPE | LLDPE | LLDPE | LLDPE | LLDPE | LLDPE | LLDPE | LLDPE | LLDPE | LLDPE | LLDPE |
| | Film thickness ($\mu$m) | 60 | 60 | 60 | 60 | 60 | 60 | 60 | 60 | 60 | 60 | 60 | 60 |
| Lamination configuration | | (1) | (1) | (1) | (1) | (1) | (1) | (1) | (1) | (1) | (1) | (1) | (1) |
| Inorganic particle content (mass%) in solid content | | 55.2% | 53.1% | 55.2% | 53.1% | 55.2% | 53.1% | 55.2% | 53.1% | 55.2% | 53.1% | 55.2% | 53.1% |
| Ratio (mass%) of inorganic particle to resin | | 55.8% | 53.6% | 55.8% | 53.6% | 55.8% | 53.6% | 55.8% | 53.6% | 55.8% | 53.6% | 55.8% | 53.6% |
| HSP difference between resin (A) and resin (B) | | 18.4 | 18.4 | 19.9 | 19.9 | 18.5 | 18.5 | 18.9 | 18.9 | 19.5 | 19.5 | 8.8 | 8.8 |

| Table 4 | | Example | | | | | | | | | | | | |
|---|---|---|---|---|---|---|---|---|---|---|---|---|---|---|
| | | 30 | 31 | 32 | 33 | 34 | 35 | 36 | 37 | 38 | 39 | 40 | 41 |
| HSP difference between resin (B) and base material 1 | | 9.9 | 9.9 | 11.3 | 11.3 | 9.0 | 9.0 | 8.4 | 8.4 | 12.2 | 12.2 | 9.0 | 9.0 |
| Thermal shrinkage rate (%) | | ≤0.1 | 12 | ≤0.1 | 9 | ≤0.1 | 11 | ≤0.1 | 11 | ≤0.1 | 10 | ≤0.1 | 12 |
| $\tan\delta$ peak temperature difference (°C) | | 1.5 | 1.5 | 1.5 | 1.5 | 1.5 | 1.5 | 1.5 | 1.5 | 1.5 | 1.5 | 1.5 | 1.5 |
| Evaluation | Heat resistance | S | S | S | S | S | S | S | S | S | S | S | S |
| | Bag forming suitability | S | S | S | S | S | S | S | S | S | S | S | S |
| | Adhesion | S | S | S | S | S | S | S | S | S | S | S | S |
| | Coloring property after heating | S | S | S | S | S | S | S | S | S | S | A | A |

[Table 4-1]

Table 4 (continued 1)

| | | Example | | | | | | | | | | | | | |
|---|---|---|---|---|---|---|---|---|---|---|---|---|---|---|---|
| | | 42 | 43 | 44 | 45 | 46 | 47 | 48 | 49 | 50 | 51 | 52 | 53 | 54 | 55 |
| Coating layer | Coating agent | 36 | 37 | 24 | 25 | 26 | 27 | 28 | 29 | 30 | 31 | 32 | 33 | 34 | 35 |
| | Solid content (%) of coating agent | 15 | 15 | 15 | 15 | 15 | 15 | 15 | 15 | 15 | 15 | 15 | 15 | 15 | 15 |
| | Plate depth (μm) | 60 | 60 | 60 | 60 | 60 | 60 | 60 | 60 | 60 | 60 | 60 | 60 | 60 | 60 |
| | Number of times to print over | 1 | 1 | 1 | 1 | 1 | 1 | 1 | 1 | 1 | 1 | 1 | 1 | 1 | 1 |
| | Film thickness (μm) | 1.0 | 1.0 | 1.0 | 1.0 | 1.0 | 1.0 | 1.0 | 1.0 | 1.0 | 1.0 | 1.0 | 1.0 | 1.0 | 1.0 |
| Base material 1 | Base material | MDOPE | MDOPE | MDOPE2 | MDOPE2 | MDOPE2 | MDOPE2 | MDOPE2 | MDOPE2 | MDOPE2 | MDOPE2 | MDOPE2 | MDOPE2 | MDOPE2 | MDOPE2 |
| | Film thickness (μm) | 25 | 25 | 25 | 25 | 25 | 25 | 25 | 25 | 25 | 25 | 25 | 25 | 25 | 25 |
| Adhesive layer | Film thickness (μm) | 2.5 | 2.5 | 2.5 | 2.5 | 2.5 | 2.5 | 2.5 | 2.5 | 2.5 | 2.5 | 2.5 | 2.5 | 2.5 | 2.5 |
| Base material 2 | Base material | LLDPE | LLDPE | LLDPE | LLDPE | LLDPE | LLDPE | LLDPE | LLDPE | LLDPE | LLDPE | LLDPE | LLDPE | LLDPE | LLDPE |
| | Film thickness (μm) | 60 | 60 | 60 | 60 | 60 | 60 | 60 | 60 | 60 | 60 | 60 | 60 | 60 | 60 |
| Lamination configuration | | (1) | (1) | (1) | (1) | (1) | (1) | (1) | (1) | (1) | (1) | (1) | (1) | (1) | (1) |
| Inorganic particle content (mass%) in solid content | | 53.1% | 53.1% | 55.2% | 53.1% | 55.2% | 53.1% | 55.2% | 53.1% | 55.2% | 53.1% | 55.2% | 53.1% | 55.2% | 53.1% |
| Ratio (mass%) of inorganic particle to resin | | 53.6% | 53.6% | 55.8% | 53.6% | 55.8% | 53.6% | 55.8% | 53.6% | 55.8% | 53.6% | 55.8% | 53.6% | 55.8% | 53.6% |
| HSP difference between resin (A) and resin (B) | | 18.4 | 18.4 | 18.4 | 18.4 | 19.9 | 19.9 | 18.5 | 18.5 | 18.9 | 18.9 | 19.5 | 19.5 | 8.8 | 8.8 |

| Table 4 (continued 1) | Example | | | | | | | | | | | | | |
|---|---|---|---|---|---|---|---|---|---|---|---|---|---|---|
| | 42 | 43 | 44 | 45 | 46 | 47 | 48 | 49 | 50 | 51 | 52 | 53 | 54 | 55 |
| HSP difference between resin (B) and base material 1 | 9.9 | 9.9 | 9.9 | 9.9 | 11.3 | 11.3 | 9.0 | 9.0 | 8.4 | 8.4 | 12.2 | 12.2 | 9.0 | 9.0 |
| Thermal shrinkage rate (%) | 12 | 12 | ≤0.1 | 12 | ≤0.1 | 9 | ≤0.1 | 11 | ≤0.1 | 11 | ≤0.1 | 10 | ≤0.1 | 12 |
| tan$\delta$ peak temperature difference (°C) | 1.5 | 1.5 | 1.5 | 1.5 | 1.5 | 1.5 | 1.5 | 1.5 | 1.5 | 1.5 | 1.5 | 1.5 | 1.5 | 1.5 |
| Evaluation | Heat resistance | S | S | S | S | S | S | S | S | S | S | S | S | S | S |
| | Bag forming suitability | S | S | S | S | S | S | S | S | S | S | S | S | S | S |
| | Adhesion | S | S | S | S | S | S | S | S | S | S | A | A | A | A |
| | Coloring property after heating | S | S | S | S | S | S | S | S | S | S | S | S | A | A |

EP 4 755 630 A1

[Table 4-2]

| Table 4 (continued 2) | | Example | | | | | | | | | |
|---|---|---|---|---|---|---|---|---|---|---|---|
| | | 56 | 57 | 58 | 59 | 60 | 61 | 62 | 63 | 64 | 65 |
| Coating layer | Coating agent | 36 | 37 | 16 | 16 | 16 | 38 | 39 | 40 | 41 | 41 |
| | Solid content (%) of coating agent | 15 | 15 | 15 | 15 | 15 | 15 | 15 | 15 | 15 | 15 |
| | Plate depth ($\mu$m) | 60 | 60 | 60 | 60 | 60 | 60 | 60 | 60 | 60 | 60 |
| | Number of times to print over | 1 | 1 | 1 | 1 | 1 | 1 | 1 | 1 | 1 | 1 |
| | Film thickness ($\mu$m) | 1.0 | 1.0 | 1 | 1 | 1 | 1 | 1 | 1 | 1.0 | 1.0 |
| Base material 1 | Base material | MDOPE2 | MDOPE2 | MDOPE3 | MDOPE4 | LLDPE | MDOPE | MDOPE | MDOPE | MDOPE | MDOPE2 |
| | Film thickness ($\mu$m) | 25 | 25 | 25 | 25 | 25 | 25 | 25 | 25 | 25 | 25 |
| Adhesive layer | Film thickness ($\mu$m) | 2.5 | 2.5 | 2.5 | 2.5 | 2.5 | 2.5 | 2.5 | 2.5 | 2.5 | 2.5 |
| Base material 2 | Base material | LLDPE | LLDPE | LLDPE | LLDPE | LLDPE | LLDPE | LLDPE | LLDPE | LLDPE | LLDPE |
| | Film thickness ($\mu$m) | 60 | 60 | 60 | 60 | 60 | 60 | 60 | 60 | 60 | 60 |
| Lamination configuration | | (1) | (1) | (1) | (1) | (1) | (1) | (1) | (1) | (1) | (1) |
| Inorganic particle content (mass%) in solid content | | 53.1% | 53.1% | 46.1 | 46.1 | 46.1 | 46.1 | 46.1 | 46.1 | 53.1% | 53.1% |
| Ratio (mass%) of inorganic particle to resin | | 53.6% | 53.6% | 48.1 | 48.1 | 48.1 | 48.1 | 48.1 | 48.1 | 53.6% | 53.6% |
| HSP difference between resin (A) and resin (B) | | 18.4 | 18.4 | 8.8 | 8.8 | 8.8 | 8.8 | 8.8 | 8.8 | 18.9 | 18.9 |
| HSP difference between resin (B) and base material 1 | | 9.9 | 9.9 | 9.0 | 9.0 | 9.0 | 9.0 | 9.0 | 9.0 | 8.4 | 8.4 |
| Thermal shrinkage rate (%) | | 12 | 12 | 11.9 | 25.9 | 10.1 | 24.8 | 29.2 | 10.8 | 11 | 11 |
| tan$\delta$ peak temperature difference (°C) | | 1.5 | 1.5 | 1.5 | 1.5 | 1.5 | 1.5 | 1.5 | 1.5 | 1.5 | 1.5 |

| Table 4 (continued 2) | | Example | | | | | | | | | |
|---|---|---|---|---|---|---|---|---|---|---|---|
| | | 56 | 57 | 58 | 59 | 60 | 61 | 62 | 63 | 64 | 65 |
| Evaluation | Heat resistance | S | S | B | B | B | B | B | A | S | S |
| | Bag forming suitability | S | S | B | B | B | B | B | A | S | S |
| | Adhesion | S | S | S | S | S | S | S | A | S | S |
| | Coloring property after heating | S | S | B | B | B | B | B | S | S | S |

EP 4 755 630 A1

**EP 4 755 630 A1**

As shown in Table 4, the laminates of Examples 30 to 63, which are the embodiments of the present invention, had a coating layer containing a resin with a glass transition temperature of 115°C or higher and had a shrinkage rate of 30 area% or less during heating and pressurizing, and therefore had good heat resistance, bag forming suitability, and adhesion, respectively. In addition, since the coloring property after heating was also good, improvement in recyclability becomes easy.

The laminates of Examples 30, 31, and 62 were each cut to 50 mm × 25 mm (in the case where a uniaxially oriented film was contained in the base material, the stretching direction (MD direction) was set to the short side 25 mm), and thermal shrinkage was evaluated. That is, in a state where the longitudinal/lateral orientation of the stretching direction of the laminate to be placed was changed, using a heat sealing tester, heating and pressurizing was performed in a range of 20 mm × 10 mm as shown in FIG. 1 and FIG. 2, and the thermal shrinkage rate of the laminate was evaluated. The thermal shrinkage rates of the respective laminates of Examples 30, 31, and 62 measured according to the above method were similar to the results of evaluation according to the method described as the measurement method for heat resistance. Based on this, it can be learned that similar thermal shrinkage rates are obtained even in the case of heating and pressurizing in the MD direction and the TD direction, respectively. In addition, not only in Example 60 using an unstretched base material, but in Examples 58 and 59 having different stretch ratios of the base materials, it can also be learned that, with the thermal shrinkage rate of the laminate being 30 area% or less, desired properties were obtained.

In addition, it can be learned that improvement in desired properties becomes easy by adjusting the composition and blending amount of the coating agent forming the coating layer and the surface treated amount of the base material.

Reference Signs List

10    laminate
A     range for heating and pressurizing
S1    area before heating and pressurizing
S2    area after heating and pressurizing
D1    end portion before heating and pressurizing (25 mm side)
D2    end portion after heating and pressurizing (25 mm side)

**Claims**

1.  A laminate sequentially comprising a base material 1, an adhesive layer, and a base material 2 and further comprising a coating layer, wherein

    the base material 1 and the base material 2 contain a polyolefin-based resin,
    the coating layer contains a resin (A) having a glass transition point of 115°C or higher, and
    a shrinkage rate of the laminate represented by (Formula 1) below is 30 area% or less upon heating and pressurizing under heating and pressurizing conditions below:

    (heating and pressurizing conditions)
    heating temperature: 145°C, pressurization: 2 kg/cm$^2$, heating and pressurizing time: 1 second,

    Shrinkage rate (area%) = {1 - (area after heating and pressurizing) / (area before heating and pressurizing)} × 100.    (Formula 1)

2.  A laminate comprising a coating layer and a base material 1, wherein

    the base material 1 contains a polyethylene resin,
    the coating layer contains a resin (A) having a glass transition point of 115°C or higher, and
    a shrinkage rate of the laminate represented by (Formula 1) below is 30 area% or less upon heating and pressurizing under heating and pressurizing conditions below:

    (heating and pressurizing conditions)
    heating temperature: 145°C, pressurization: 2 kg/cm$^2$, heating and pressurizing time: 1 second,

Shrinkage rate (area%) = {1 - (area after heating and pressurizing) / (area before heating and pressurizing)} $\times$ 100.　　(Formula 1)

3.  The laminate according to claim 1, wherein the polyolefin-based resin is a polyethylene resin.

4.  The laminate according to claim 1 or 2, wherein a difference between a peak temperature of loss tangent (tan$\delta$) of the laminate and a peak temperature of tan$\delta$ of the laminate excluding the coating layer, measured at 80°C to 170°C based on JIS K 7244, is 1.0°C or more.

5.  The laminate according to claim 1 or 2, wherein the resin (A) contains a resin having a ring structure.

6.  The laminate according to claim 1 or 2, wherein the coating layer further contains a chlorinated polyolefin resin.

7.  The laminate according to claim 1 or 2, wherein the coating layer further contains a particle.

8.  A method for producing a laminate, which is a method for producing a laminate sequentially comprising a base material 1, an adhesive layer, and a base material 2 and further comprising a coating layer, the method comprising:

    a step of printing a coating agent containing a resin (A) having a glass transition point of 115°C or higher onto one surface of the base material 1 to form the coating layer;
    a step of printing an adhesive onto the other surface of the base material 1 or onto the coating layer to form the adhesive layer; and
    a step of bonding the base material 2 onto the adhesive layer, wherein
    a shrinkage rate of the laminate represented by (Formula 1) below is 30 area% or less upon heating and pressurizing under heating and pressurizing conditions below:

    (heating and pressurizing conditions)
    heating temperature: 145°C, pressurization: 2 kg/cm$^2$, heating and pressurizing time: 1 second,

    Shrinkage rate (area%) = {1 - (area after heating and pressurizing) / (area before heating and pressurizing)} $\times$ 100.　　(Formula 1)

9.  The laminate according to claim 1 or 2, which is a laminate for a gusset bag or a stand-up pouch.

10. A packaging material configured using the laminate according to claim 1 or 2.

11. A coating agent used for forming a coating layer of a laminate sequentially comprising a base material 1, an adhesive layer, and a base material 2 and further comprising the coating layer, wherein the base material 1 and the base material 2 contain a polyolefin-based resin, the coating agent comprising:
    a resin (A) having a glass transition point of 115°C or higher, and a solvent.

10

50mm

25mm

20mm

10mm

A(S1)

# FIG. 1

10

D2

D1

S2

# FIG. 2

## INTERNATIONAL SEARCH REPORT

| International application No. |
|---|
| **PCT/JP2024/027627** |

### A. CLASSIFICATION OF SUBJECT MATTER

***B32B 27/32***(2006.01)i; ***B05D 3/00***(2006.01)i; ***B05D 3/02***(2006.01)i; ***B05D 3/12***(2006.01)i; ***B05D 7/24***(2006.01)i; ***C09D 4/00***(2006.01)i; ***C09D 201/00***(2006.01)i

FI:  B32B27/32 E; B05D3/00 D; B05D3/02 Z; B05D3/12 C; B05D7/24 301Z; C09D4/00; C09D201/00

According to International Patent Classification (IPC) or to both national classification and IPC

### B. FIELDS SEARCHED

Minimum documentation searched (classification system followed by classification symbols)

B32B1/00-43/00; B05D1/00-7/26; C09D1/00-10/00; 101/00-201/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-210129 A (DAICEL CORP.) 15 December 2016 (2016-12-15) | 11 |
|  | claims 1, 6-7, 10, paragraphs [0022]-[0023], [0057]-[0058], [0085]-[0087] | |
| A | | 1-10 |
| X | JP 10-237356 A (TOYO INK MFG CO., LTD.) 08 September 1998 (1998-09-08) | 11 |
|  | claims 1-2, paragraphs [0007], [0017]-[0019], [0034], [0043], [0053]-[0054] | |
| A | | 1-10 |
| A | JP 2022-175645 A (RENGO CO., LTD.) 25 November 2022 (2022-11-25) | 1-11 |
|  | claims 1-4, paragraphs [0013], [0017], [0028]-[0029] | |
| A | JP 2016-055537 A (DIC CORPORATION) 21 April 2016 (2016-04-21) | 1-11 |
|  | claims 1-10, paragraphs [0013]-[0016], [0056]-[0064], [0067]-[0069], [0076]-[0077], [0081] | |

☑ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 October 2024** | **15 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/027627**

### C.    DOCUMENTS CONSIDERED TO BE RELEVANT

| Category* | Citation of document, with indication, where appropriate, of the relevant passages | Relevant to claim No. |
|---|---|---|
| A | JP 2019-059528 A (DAI NIPPON PRINTING CO., LTD.) 18 April 2019 (2019-04-18) claims 1, 6-8, paragraphs [0018], [0063]-[0066], [0070], [0073] | 1-11 |
| A | JP 2021-165023 A (TOYO INK SC HOLDINGS CO., LTD.) 14 October 2021 (2021-10-14) claims 1, 4-9, paragraphs [0020]-[0029], [0034], [0040]-[0042], [0044]-[0045], [0047], [0064]-[0066], [0074]-[0079] | 1-11 |
| A | JP 2020-070323 A (JAPAN STEEL WORKS LTD.) 07 May 2020 (2020-05-07) claims 1-18, paragraphs [0026]-[0028], [0036]-[0041], [0060]-[0063] | 1-11 |

Form PCT/ISA/210 (second sheet) (July 2022)

### INTERNATIONAL SEARCH REPORT
**Information on patent family members**

International application No.

**PCT/JP2024/027627**

| Patent document cited in search report | | | Publication date (day/month/year) | Patent family member(s) | Publication date (day/month/year) |
|---|---|---|---|---|---|
| JP | 2016-210129 | A | 15 December 2016 | (Family: none) | |
| JP | 10-237356 | A | 08 September 1998 | (Family: none) | |
| JP | 2022-175645 | A | 25 November 2022 | (Family: none) | |
| JP | 2016-055537 | A | 21 April 2016 | (Family: none) | |
| JP | 2019-059528 | A | 18 April 2019 | (Family: none) | |
| JP | 2021-165023 | A | 14 October 2021 | (Family: none) | |
| JP | 2020-070323 | A | 07 May 2020 | US 2022/0021075 A1<br>claims 1-18, paragraphs [0039]-[0042], [0050]-[0055], [0074]-[0078]<br>EP 3875522 A1<br>CN 112867757 A<br>KR 10-2021-0088557 A<br>TW 202028323 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020055157 A
- WO 2022230812 A
- JP 2020059535 A
- JP 2023126372 A